# EUROPÄISCHE PATENTSCHRIFT

(11) **EP 3 912 864 B1**
(45) Veröffentlichungstag und Bekanntmachung des Hinweises auf die Patenterteilung: **03.07.2024**
(21) Anmeldenummer: 21175081.5
(22) Anmeldetag: 20.05.2021
(51) Int. Cl.: B60R 13/04, B60R 13/06, B60R 13/07

(54) **VEHICLE TRIM STRP DEVICE AND VEHICLE WITH SUCH A TRIM STRIP DEVICE**
VEHICLE RAIL DEVICE AND VEHICLE WITH SUCH A VEHICLE RAIL DEVICE
DISPOSITIF DE BARRE POUR VÉHICULE ET VÉHICULE DOTÉ D'UN TEL DISPOSITIF DE BARRE POUR VÉHICULE

(30) Priorität: 22.05.2020 DE 102020206401
(43) Veröffentlichungstag der Anmeldung: 24.11.2021
(73) Patentinhaber: Motherson Innovations Company Limited, London EC2N 2AX (GB)
(72) Erfinder: WITTMANN, Peter, 96450 Coburg (DE)
(74) Vertreter: Isarpatent

(56) Entgegenhaltungen:
- DE-A1-102006 054 248
- DE-A1-102008 028 599
- US-A- 4 950 019
- US-A- 5 114 206
- US-B1- 7 004 535

## Beschreibung

### GEBIET DER ERFINDUNG

Die vorliegende Erfindung betrifft eine Fahrzeug-Leistenvorrichtung für ein Fahrzeug sowie ein Fahrzeug mit einer derartigen Fahrzeug-Leistenvorrichtung.

### TECHNISCHER HINTERGRUND

Aus der DE 10 2006 002 556 B3 ist ein Verbindungselement bekannt, das zwei Verbindungsbereiche und einen Befestigungsbereich aufweist zum Verbinden von Leisten sowie zum Befestigen dieser Leisten an einer Karosserie eines Fahrzeugs.

Des Weiteren ist aus der DE 20 2007 005 065 U1 ein Befestigungsclip zum Befestigen einer Dachleiste an einem Dachkanal eines Fahrzeugs bekannt. Der Befestigungsclip weist dabei eine sehr komplexe Form auf zum Befestigen der Dachleiste.

Fahrzeugleisten, wie z.B. Wasserabweiserleisten, müssen je nach Fahrzeugtyp entsprechend geformt werden und gegebenenfalls derart ausgebildet werden, dass sie mit einer anderen angrenzende Leiste, hier Dachleiste, verbunden werden kann.

Die DE 10 2008 028599 A1 beschreibt ein als Funktions- und Zierleiste ausgebildetes Anbauteil zur Beaufschlagung im Au-ßenbereich oder im Innenraum von Fahrzeugen, welches zweiteilig aus einem Grundkörper und einer an dem Grundkörper befestigten Blende ausgeführt ist. Das Anbauteil weist dabei ein Schalenelement und ein Befestigungsleistenelement auf, welche mit einem Befestigungsmodul ausgeformt sind. Schalenelement und Befestigungsleistenelement, die als Kunststoffspritzgussteil ausgebildet sein können, sind mittels des Befestigungsmoduls aneinander befestigbar.

Ferner wird auf die DE 10 2006 054248 A1 und die US 5,114,206 verwiesen, die jeweils Halteleisten bzw. Befestigungsvorrichtungen für solche Leisten bei Kraftfahrzeugen zeigen.

### ZUSAMMENFASSUNG DER ERFINDUNG

Vor diesem Hintergrund liegt der vorliegenden Erfindung die Aufgabe zugrunde, eine verbesserte Fahrzeug-Leistenvorrichtung für ein Fahrzeug bereitzustellen.

Erfindungsgemäß wird diese Aufgabe durch eine Fahrzeug-Leistenvorrichtung mit den Merkmalen des Patentanspruchs 1 und durch ein Fahrzeug mit den Merkmalen des Patentanspruches 13 gelöst.

Die Fahrzeug-Leistenvorrichtung hat den Vorteil, dass das Schalenelement und das Befestigungsleistenelement als Spritzgussteile im Gegensatz zu Extrusionsteilen eine nahezu freie Wahl von Form und Oberflächenstruktur erlauben und sehr einfach mit dem Befestigungsmodul ausgeformt werden können zur Befestigung aneinander, beispielsweise durch Ineinanderschieben, miteinander verrasten und/oder miteinander verklemmen von Schalenelement und Befestigungsleistenelement durch das gemeinsame Befestigungsmodul usw.. Dadurch kann die Fahrzeug-Leistenvorrichtung einfach und kostengünstig an unterschiedliche Fahrzeugtypen angepasst werden, sowie alle Art von Funktions- und/oder Zierleiste bei einem Kraftfahrzeug realisiert werden.

Die der vorliegenden Erfindung zugrunde liegende Erkenntnis/Idee besteht darin, eine Fahrzeug-Leistenvorrichtung bereitzustellen, die leicht an unterschiedliches Vorgaben insbesondere hinsichtlich Form und Oberflächenstruktur angepasst werden kann und des Weiteren einfach an einem Fahrzeug befestigt werden kann. Dazu weist die Fahrzeug-Leistenvorrichtung einerseits das Schalenelement auf, welches die Außenseite und Sichtseite der Fahrzeug-Leistenvorrichtung aufweist und andererseits das Befestigungsleistenelement zum Befestigen der Fahrzeug-Leistenvorrichtung an dem Fahrzeug und zum Bereitstellen wahlweise zusätzlich wenigstens eines Funktionsabschnitts, z.B. einem Wasserabweiserabschnitt mit dem das Befestigungsleistenelement ausgeformt ist. Da das Schalenelement und des Befestigungsleistenelement als Kunststoffspritzgussteile ausgebildet sind, erlaubt dies eine nahezu freie Wahl von Form und Oberflächenstruktur sowie das Ausformen des Schalenelements und des Befestigungsleistenelements mit dem wenigstens einen Befestigungsmoduls zum Befestigen aneinander, ohne, dass hierfür zusätzliche separate Befestigungsmittel wie Klammern usw. erforderlich sind, sowie zum Ausformen des Befestigungsleistenelements mit wenigstens wahlweise zusätzlichen einem Funktionsabschnitt.

Vorteilhafte Ausgestaltungen und Weiterbildungen ergeben sich aus den weiteren Unteransprüchen sowie aus der Beschreibung unter Bezugnahme auf die Figuren der Zeichnung.

In einer erfindungsgemäßen Ausführungsform sind das Schalenelement und das Befestigungsleistenelement durch Verrasten, Verklemmen und/oder Zusammenschieben durch das wenigstens ein Befestigungsmodul aneinander befestigt, insbesondere lösbar befestigt.

In einer weiteren erfindungsgemäßen Ausführungsform ist das Befestigungsleistenelement mit wenigstens einem Funktionsabschnitt ausgeformt, z.B. einem Wasserabweiserabschnitt, einer Lippe, wie z.B. einer Dichtungslippe und/oder Gummilippe.

Gemäß einer erfindungsgemäßen Ausführungsform ist das Befestigungsleistenelement mit einem Verbindungsabschnitt ausgeformt, wobei der Verbindungsabschnitt z.B. ein Endkappenabschnitt ist zum Verbinden der Fahrzeug-Leistenvorrichtung mit einer weiteren Fahrzeugleiste, beispielsweise einer Dachleiste.

Erfindungsgemäß weist das Befestigungsleistenelement eine Aufnahme zum Aufnehmen eines Längsendes des Schalenelements und zum Positionieren des Schalenelements gegenüber dem Befestigungsleistenelement auf.

Erfindungsgemäß weist die Aufnahme ferner eine Öffnung und das Längsende des Schalenelements einen Vorsprung auf, wobei der Vorsprung in der Öffnung aufnehmbar ist zum Aufnehmen des Längsendes des Schalenelements und zum Positionieren des Schalenelements gegenüber dem Befestigungsleistenelement. Der Vorsprung ist z.B. in der Öffnung zusätzlich einklemmbar oder einrastbar zum zusätzlichen Befestigen des Schalenelements und des Befestigungsleistenelements aneinander.

Gemäß einer erfindungsgemäßen Ausführungsform setzt sich das Befestigungsmodul aus einem ersten Befestigungsabschnitt auf einer ersten Längsseite des Schalenelements und des Befestigungsleistenelements und einem zweiten Befestigungsabschnitt auf einer zweiten, gegenüberliegenden Längsseite des Schalenelements und des Befestigungsleistenelements zusammen. Der erste Befestigungsabschnitt und der zweite Befestigungsabschnitt erstrecken sich zumindest entlang einer Teillänge oder über die gesamte Länge der Fahrzeug-Leistenvorrichtung in Längsrichtung. Der erste und zweite Befestigungsabschnitt des Befestigungsmoduls überlappen sich dabei beispielsweise vollständig oder teilweise in Längsrichtung der Fahrzeug-Leistenvorrichtung.

In einer erfindungsgemäßen Ausführungsform sind das Schalenelement und das Befestigungsleistenelement mit einem ersten Befestigungsmodul ausgeformt. Das erste Befestigungsmodul setzt sich aus einem ersten Befestigungsabschnitt auf einer ersten Längsseite des Schalenelements und des Befestigungsleistenelements und einem zweiten Befestigungsabschnitt auf einer zweiten, gegenüberliegenden Längsseite des Schalenelements und des Befestigungsleistenelements zusammen. Der erste Befestigungsabschnitt ist aus einer Hinterschneidung, z.B. in Form eines hakenförmigen Abschnitts, des Schalenelements und einem Klemmabschnitt des Befestigungsleistenelements gebildet, wobei der Klemmabschnitt an der Hinterschneidung untergehakt oder von dieser in montiertem Zustand der Fahrzeug-Leistenvorrichtung umgriffen ist. Der zweite Befestigungsabschnitt ist aus einem Vorsprung an der Unterseite des Schalenelements und einer zu dem Vorsprung korrespondierenden Aufnahme des Befestigungselements gebildet, zum Aufnehmen und wahlweise zusätzlichen Einklemmen des Vorsprungs in montiertem Zustand der Fahrzeug-Leistenvorrichtung.

In einer weiteren erfindungsgemäßen Ausführungsform sind das Schalenelement und das Befestigungsleistenelement mit einem zweiten Befestigungsmodul ausgeformt. Das zweite Befestigungsmodul setzt sich aus einem ersten Befestigungsabschnitt auf einer ersten Längsseite des Schalenelements und des Befestigungsleistenelements und einem zweiten Befestigungsabschnitt auf einer zweiten, gegenüberliegenden Längsseite des Schalenelements und des Befestigungsleistenelements zusammen. Der erste Befestigungsabschnitt ist aus einem Positionierungs-Vorsprung an der Unterseite des Schalenelements und einem zugeordneten Bereich der Außenkante des Befestigungsleistenelements gebildet zum Positionieren des Schalenelements mit seinem Vorsprung gegenüber dem Befestigungsleistenelement in montiertem Zustand der Fahrzeug-Leistenvorrichtung, wobei z.B. zusätzlich ein Spalt zwischen der Außenkante des Befestigungsleistenelements und der gegenüberliegenden Innenkante des Positionierungs-Vorsprungs des Schalenelements vorgesehen ist. Der zweite Befestigungsabschnitt ist aus einem Rastelement an der Unterseite des Schalenelements und einer zu dem Rastelement korrespondierenden Aufnahme des Befestigungsleistenelements gebildet, zum Aufnehmen und Einrasten des Rastelements in montiertem Zustand der Fahrzeug-Leistenvorrichtung, wobei die Aufnahme z.B. eine Öffnung zum Einrasten des Rastelements aufweist.

Gemäß einer erfindungsgemäßen Ausführungsform sind das Schalenelement und das Befestigungsleistenelement mit einem dritten Befestigungsmodul ausgeformt. Das dritte Befestigungsmodul setzt sich aus einem ersten Befestigungsabschnitt auf einer ersten Längsseite des Schalenelements und des Befestigungsleistenelements und einem zweiten Befestigungsabschnitt auf einer zweiten, gegenüberliegenden Längsseite des Schalenelements und des Befestigungsleistenelements zusammen. Der erste Befestigungsabschnitt ist aus einem Vorsprung mit einer Hinterschneidung, z.B. in Form eines hakenförmigen Abschnitts, des Schalenelements und einem Klemmabschnitt des Befestigungsleistenelements gebildet ist, wobei der Klemmabschnitt an dem Vorsprung mit der Hinterschneidung untergehakt oder von dieser in montiertem Zustand der Fahrzeug-Leistenvorrichtung umgriffen ist. Der zweite Befestigungsabschnitt ist aus einem Positionierungs-Vorsprung an der Unterseite des Schalenelements und einer zu dem Positionierungs-Vorsprung und einem zugeordneten Bereich der Außenkante des Befestigungsleistenelements gebildet zum Positionieren des Schalenelements mit seinem Positionierungs-Vorsprung gegenüber dem Befestigungsleistenelement in montiertem Zustand der Fahrzeug-Leistenvorrichtung, wobei z.B. zusätzlich ein Spalt zwischen der Außenkante des Befestigungsleistenelements und der gegenüberliegenden Innenkante des Positionierungs-Vorsprungs des Schalenelements vorgesehen ist. Der zugeordnete Bereich der Außenkante weist wahlweise zusätzlich einen abgestuften Abschnitt auf, auf dessen Oberseite dem Schalenelement gegenüberliegenden ein Funktionsabschnitt ausgebildet ist, beispielsweise in Form einer Lippe, z.B. einer Gummi- oder Dichtungslippe.

In einer weiteren erfindungsgemäßen Ausführungsform sind der erste und zweite Befestigungsabschnitt wenigstens eines Befestigungsmoduls einander gegenüberliegend an den Längsseiten des Schalenelements und des Befestigungsleistenelements vorgesehen, wobei der erste und zweite Befestigungsabschnitt sich dabei zumindest teilweise oder vollständig überlappen.

In einer anderen erfindungsgemäßen Ausführungsform ist die Befestigungsleistenvorrichtung mit wenigstens einer Aufnahme, insbesondere einer Öffnung, zum Aufnehmen und Befestigen, z.B. Anclipsen oder Aufrasten, einer Klammereinrichtung ausgebildet. Die Klammereinrichtung dient dabei zum Verbinden der Fahrzeug-Leistenvorrichtung mit dem zugeordneten Fahrzeug und vorzugsweise zusätzlich zum Befestigen der Fahrzeug-Leistenvorrichtung an der Fahrzeug-Karosserie des zugeordneten Fahrzeugs, beispielsweise durch Verclipsen oder Aufzurasten an der Fahrzeug-Karosserie.

Gemäß einer erfindungsgemäßen Ausführungsform ist bzw. sind das Schalenelement und/oder das Befestigungsleistenelement als Einkomponenten-Spritzgussteil oder Mehrkomponenten Spritzgussteil, insbesondere Zwei- oder Dreikomponenten-Spritzgussteil, ausgebildet.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine Vorderansicht eines Fahrzeugs, welches eine jeweilige erfindungsgemäße Fahrzeug-Leistenvorrichtung in Form einer Dachleiste aufweist;
- Fig. 2: eine Perspektivansicht einer Fahrzeug-Leistenvorrichtung gemäß einer Ausführungsform der Erfindung, wobei die Fahrzeug-Leistenvorrichtung vor dem Zusammenbau gezeigt ist;
- Fig. 3: eine Perspektivansicht der Fahrzeug-Leistenvorrichtung gemäß Fig. 2 in fertig zusammengebautem Zustand;
- Fig. 4: eine Perspektivansicht der Fahrzeug-Leistenvorrichtung gemäß Fig. 3;
- Fig. 5: eine weitere Perspektivansicht der Fahrzeug-Leistenvorrichtung gemäß Fig. 3;
- Fig. 6: eine andere Perspektivansicht der Fahrzeug-Leistenvorrichtung gemäß Fig. 3;
- Fig. 7: eine weitere Perspektivansicht der Fahrzeug-Leistenvorrichtung gemäß Fig. 3;
- Fig. 8: eine Perspektivansicht der Fahrzeug-Leistenvorrichtung gemäß Fig. 3 und die Anbindung zur Windschutzscheide, Fahrzeug-Seitenwand und zur Dachleiste;
- Fig. 9: eine Schnittansicht A-A der Fahrzeug-Leistenvorrichtung gemäß Fig. 6 im Bereich des Endkappenabschnitts;
- Fig. 10: eine Perspektivansicht eines Ausschnitts der Fahrzeug-Leistenvorrichtung gemäß Fig. 9 im Bereich des Endkappenabschnitts;
- Fig. 11: eine Schnittansicht B-B der Fahrzeug-Leistenvorrichtung gemäß Fig. 7;
- Fig. 12: eine Schnittansicht C-C der Fahrzeug-Leistenvorrichtung gemäß Fig. 7;
- Fig. 13: eine Perspektivansicht des Bereichs des Schnitts C-C der Fahrzeug-Leistenvorrichtung gemäß Fig. 7;
- Fig. 14: eine Schnittansicht D-D der Fahrzeug-Leistenvorrichtung gemäß Fig. 6; und
- Fig. 15: eine Perspektivansicht eines Ausschnitts der Fahrzeug-Leistenvorrichtung und ihrer Befestigung an der Fahrzeug-Seitenwand mittels Metallklammern.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

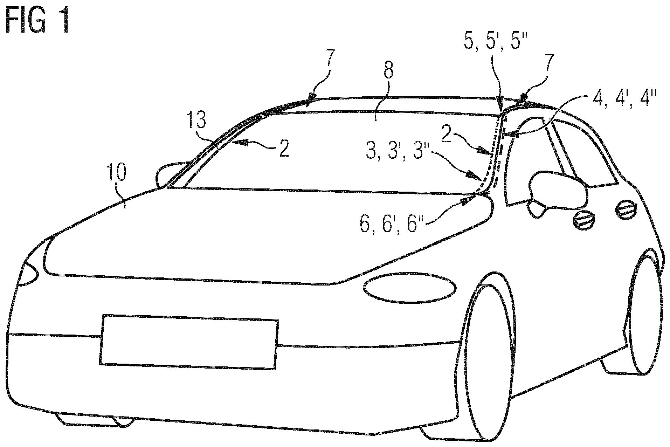

In Fig. 1 ist eine Vorderansicht eines Fahrzeugs 1 in einer Perspektivansicht gezeigt, wobei das Fahrzeug 1 eine jeweilige erfindungsgemäße Fahrzeug-Leistenvorrichtung 2 aufweist. Die Fahrzeug-Leistenvorrichtung 2 weist dabei eine erste Längsseite 3 und eine zweite Längsseite 4 sowie ein erstes Längsende 5 und ein zweites Längsende 6 auf.

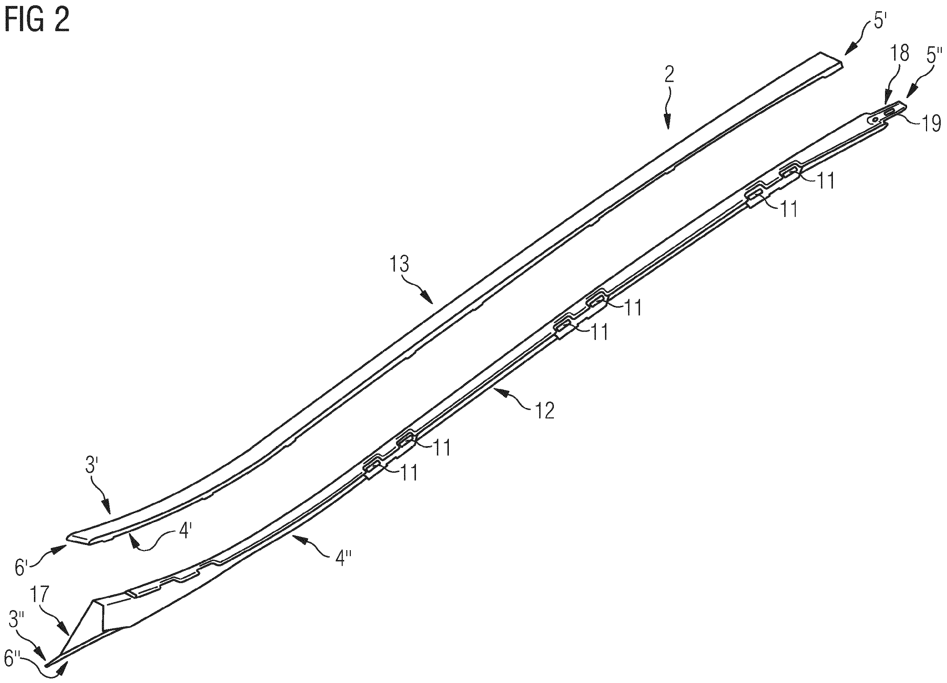

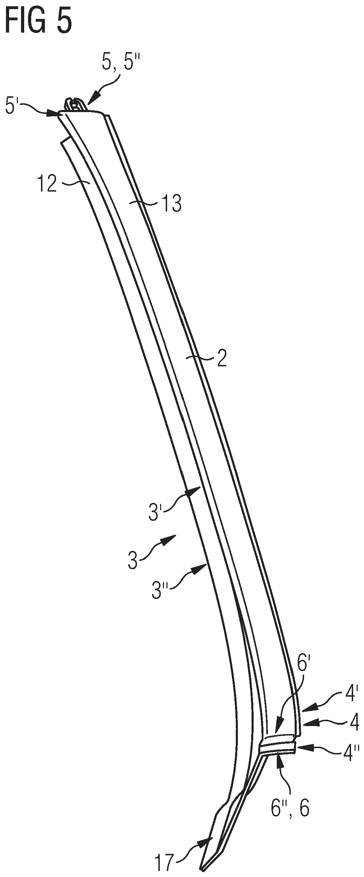

In dem in Fig. 1 und den nachfolgenden Fig. 2 bis 15 gezeigten Ausführungsbeispiel der erfindungsgemäßen Fahrzeug-Leistenvorrichtung 2, ist die Fahrzeug-Leistenvorrichtung 2 z.B. als Wasserabweiserleiste ausgebildet, welche mit einer zugeordneten Dachleiste 7 verbunden ist. Die Wasserabweiserleiste dient dazu z.B. soweit wie möglich zu verhindern, dass beim Betrieb der Scheibenwaschanlage Wasser auf die Seitenfenster und die beiden Spiegel übertreten kann. Die erfindungsgemäße Fahrzeug-Leistenvorrichtung 2, welche anhand der beigefügten Fig. 1-15 am Beispiel einer Wasserabweiserleiste beschrieben wird, ist jedoch nicht auf Wasserabweiserleisten bei Fahrzeugen, insbesondere Kraftfahrzeugen, beschränkt, sondern kann auch als jede andere Funktions- und/oder Zierleiste bei einem Fahrzeug und insbesondere Kraftfahrzeug ausgebildet sein.

Bei der Wasserabweiserleiste als ein Beispiel für die erfindungsgemäße Fahrzeug-Leistenvorrichtung 2 ist die erste Längsseite 3 benachbart zu der Windschutzscheibe 8 und die zweite Längsseite 4 benachbart zur der Fahrzeugkarosserie, hier der Seitenwand 9 oder A-Säule angeordnet. Das erste Längsende 5 der Wasserabweiserleiste ist wiederum gegenüber der zugeordneten Dachleiste 7 und das zweite Längsende 6 gegenüberliegenden der Motorhaube (und der Wasserkastenabdeckung) 10 angeordnet in dem in Fig. 1 gezeigten Beispiel eines Kraftfahrzeugs.

In Fig. 2 ist eine Perspektivansicht der Fahrzeug-Leistenvorrichtung 2 gemäß einer Ausführungsform der Erfindung gezeigt, wobei die Fahrzeug-Leistenvorrichtung 2 vor dem Zusammenbau dargestellt ist. Dabei sind die erste und zweite Längsseite 3, 4, sowie das erste und zweite Längsende 5, 6 der Fahrzeug-Leistenvorrichtung 2 gezeigt. In Fig. 2 sind außerdem die Öffnungen 11 in dem Befestigungsleistenelement 12 der Fahrzeug-Leistenvorrichtung 2 gezeigt zum Befestigen des Befestigungsleistenelements 12 und damit der erfindungsgemäßen Fahrzeug-Leistenvorrichtung 2 an der Fahrzeugkarosserie.

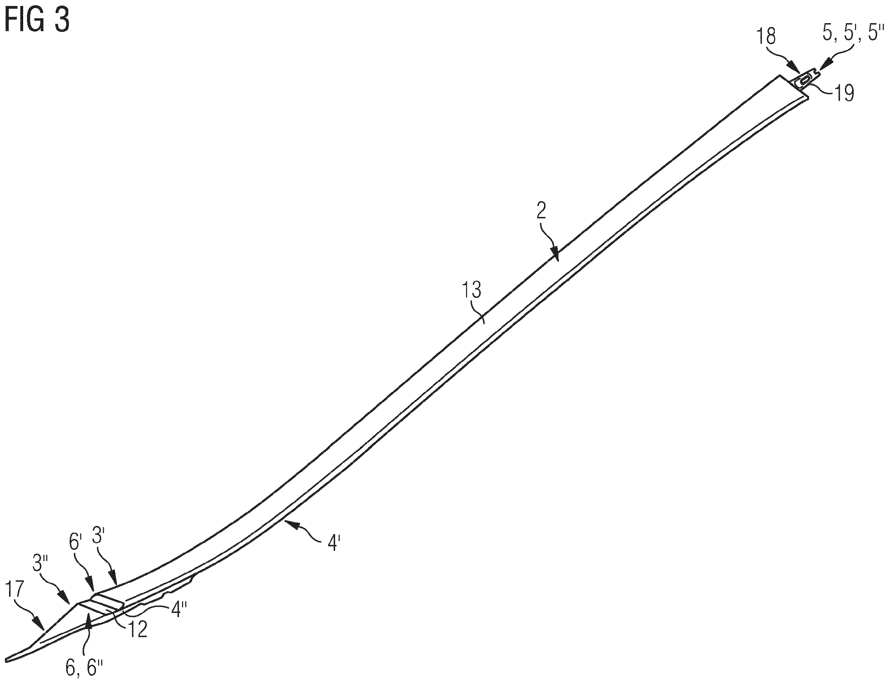

In Fig. 3 ist die Fahrzeug-Leistenvorrichtung 2 gemäß Fig. 1 und 2 ebenfalls in einer Perspektivansicht gezeigt, wobei die Fahrzeug-Leistenvorrichtung 2 dabei fertig montiert oder zusammengebaut dargestellt ist.

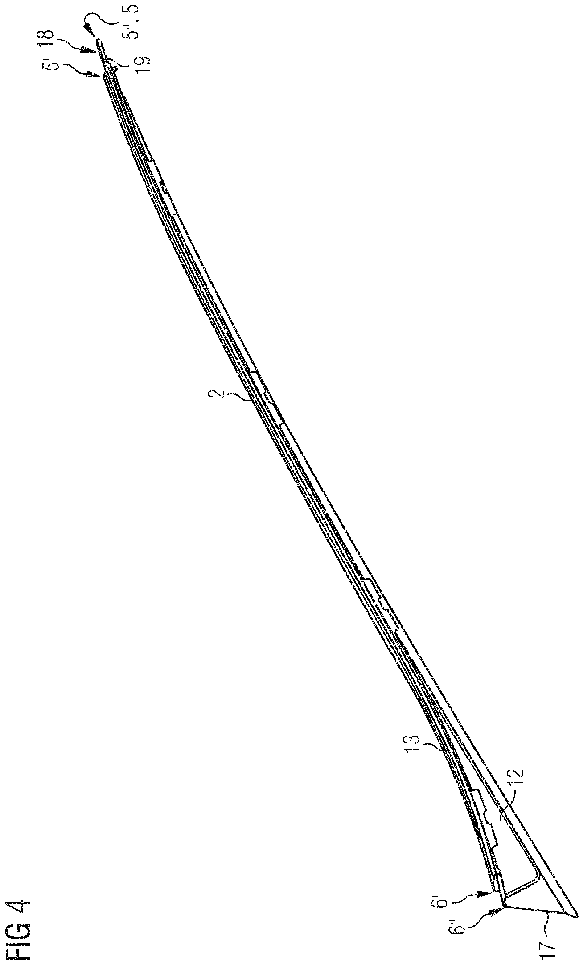

Die Fig. 4, 5, 6 und 7 zeigen weitere Ansicht der Fahrzeug-Leistenvorrichtung 2 gemäß der Fig. 1, 2 und 3 aus verschiedenen Perspektiven.

Wie z.B. in Fig. 2 gezeigt ist besteht die Fahrzeug-Leistenvorrichtung 2 aus einem Schalenelement 13 und dem Befestigungsleistenelement 12. Die Fahrzeug-Leistenvorrichtung 2 und genauer deren Schalenelement 13 und Befestigungsleistenelement 12 erstrecken sich dabei in Längsrichtung und als Wasserabweiserleiste dabei seitlich entlang der Windschutzscheibe 8 zwischen Dach und Motorhaube (und Wasserkastenabdeckung) 10.

Das Schalenelement 13 und das Befestigungsleistenelemente 12 weisen dabei jeweils eine erste und zweite Längsseite 3', 3"; 4', 4" und ein erstes und zweites Längsende 5',5''; 6', 6" auf korrespondierend zu der ersten und zweiten Längsseite 3, 4 und dem ersten und zweiten Längsende 5, 6 der Fahrzeug-Leistenvorrichtung 2 in montiertem Zustand.

Das Schalenelement 13 wird dabei mit seiner Innenseite auf der Außenseite des Befestigungsleistenelements 12 befestigt. Die Außenseite des Schalenelements 13 bildet wiederum die Sichtseite des Schalenelements 13, insbesondere wenn das Schalenelement 13 als Teil der Fahrzeug-Leistenvorrichtung 2 an dem Fahrzeug 1 befestigt ist, wie in Fig. 1 gezeigt ist.

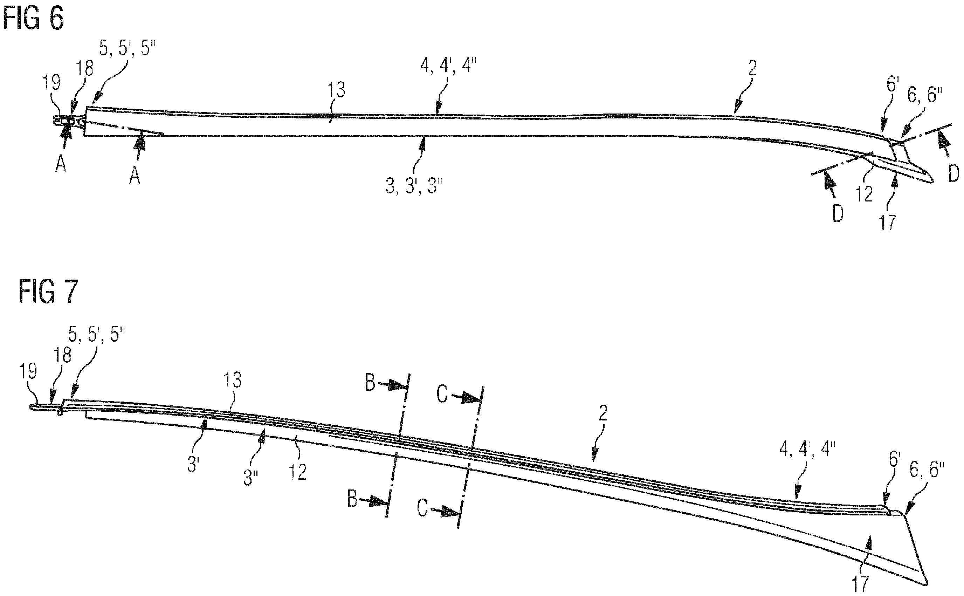

Das Befestigungsleistenelement 12 und das Schalenelement 13 sind derart ausgebildet, dass sie aneinander befestigbar sind. Die Fahrzeug-Leistenvorrichtung 2 weist dazu eine oder mehrere Befestigungsmodule 14, 15, 16 mit ersten und zweiten Befestigungsabschnitten auf zum Befestigen des Befestigungsleistenelements 12 und des Schalenelements 13 aneinander, wie im Folgenden insbesondere auch anhand der Fig. 6 bis 15 noch detaillierter beschrieben wird.

Da die Fahrzeug-Leistenvorrichtung 2 in dem in den Fig. 1 bis 15 gezeigten Ausführungsbeispiel als Wasserabweiserleiste vorgesehen ist, ist das Befestigungsleistenelement 12 in dem in Fig. 1 bis 15 gezeigten Ausführungsbeispiel optional zusätzlich mit wenigstens einem ersten Funktionsabschnitt, hier einem Wasserabweiserabschnitt 17, ausgebildet. Der Wasserabweiserabschnitt 17 ist dabei auf der ersten Längsseite 3" des Befestigungsleistenelements 12 vorgesehen und erstreckt sich in eingebautem Zustand, wie zuvor in Fig. 1 gezeigt ist, entlang der Windschutzscheibe 8.

Der Wasserabweiserabschnitt 17 ist derart geformt zu verhindern, dass beim Betrieb der Scheibenwaschanlage bei Regenfahrten Wasser von der Windschutzscheibe 8 auf die Seitenfenster und die beiden Spiegel übertreten kann. Stattdessen lenkt der Wasserabweiseabschnitt 17 das Wasser nach oben in Richtung Fahrzeugdach und Dachleisten 7, von wo es durch den Fahrtwind entfernt werden kann.

Zur Befestigung des Schalenelements 13 an dem Befestigungsleistenelement 12 sind das Schalenelement 13 und das Befestigungsleistenelement 12 beispielsweise an ihren Befestigungsmodulen 14, 15, 16 miteinander verrastbar, verklemmbar und/oder ineinander einschiebbar ausgebildet, wie im Folgenden anhand der Fig. 6 bis 15 näher erläutert wird. Die Fahrzeug-Leistenvorrichtung 2 weist dazu, wie zuvor ausgeführt, ein oder mehrere Befestigungsmodule 14, 15, 16 auf zum Befestigen des Schalenelements 13 und des Befestigungsleistenelements 12 aneinander. Beispiele für die Befestigungsmodule 14, 15, 16 und deren erste und zweite Befestigungsabschnitte an der ersten und zweiten Längsseite 3', 4'; 3'', 4" des Schalenelements 13 und des Befestigungsleistenelements 12 werden im Folgenden mit Bezug auf die Fig. 6 bis 15 detaillierter beschrieben.

Des Weiteren weist das Befestigungsleistenelement 12 als Wasserabweiserleiste in dem in den Fig. 1 bis 15 gezeigten Ausführungsbeispiel an einem Längsende, hier dem ersten Längsende 5", wahlweise zusätzlich einen Verbindungsabschnitt 18 auf, zum Verbinden der Wasserabweiserleiste mit der zugeordneten Dachleiste 7 und optional zum zusätzlichen Befestigen der Wasserabweiserleiste an der Dachleiste 7, z.B. durch Zusammenstecken, Zusammenschieben, Verklemmen und/oder miteinander Verrasten usw.. Der Verbindungsabschnitt 18 am ersten Längsende 5" des Befestigungsleistenelements 12 ist in dem Ausführungsbeispiel in den Fig. 1-15 als ein Endkappenabschnitt 19 ausgebildet zum Übergang und wahlweise zusätzlichen Anschluss an die Dachleiste 7, hier breitere Dachleiste 7. Der Verbindungsabschnitt 18, hier Endkappenabschnitt 19, ist dabei einteilig oder integral mit dem übrigen Befestigungsleistenelement 12 ausgebildet. Mit anderen Worten, das Befestigungsleistenelement 12 wird mit seinem Verbindungsabschnitt 18 als ein Spritzgussteil hergestellt. Der Endkappenabschnitt 19 als Verbindungsabschnitt 18 kann dabei derart ausgebildet sein, dass er mit der Dachleiste 7 verbindbar und insbesondere der Endkappenabschnitt 19 und die Dachleiste 7 zusätzlich aneinander befestigbar sind, beispielsweise durch Zusammenstecken, Zusammenschieben, Verklemmen und/oder miteinander Verrasten usw..

Wie zuvor ausgeführt, weist das Befestigungsleistenelement 12 optional wenigstens einen ersten Funktionsabschnitt, hier z.B. Wasserabweiserabschnitt 17, auf. Je nach Funktion und Einsatzzweck kann aber auch jeder andere Funktionsabschnitt an dem Befestigungsleistenelement 12 vorgesehen werden, je nach Fahrzeug-Leistenvorrichtung 2.

Das Befestigungsleistenelement 12 ist z.B. als Mehrkomponenten Spritzgussteil, beispielsweise als wenigstens Zweikomponenten (2K) Spritzgussteil ausgebildet. Es kann aber ebenso auch nur als Einkomponenten (1K) Spritzgussteil ausgebildet sein, je nach Funktion und Einsatzzweck.

Dabei ist der wenigstens eine optionale, erste Funktionsabschnitt in Form eines Wasserabweiserabschnitts 17 beispielsweise aus einem weichen oder elastischen Kunststoff oder Kunststoffkombination, beispielsweise aus wenigstens einem Elastomer hergestellt. Je nach Funktion und Einsatzzweck kann der Funktionsabschnitt aber statt weich oder elastisch ebenso fest und gegebenenfalls hart oder starr ausgebildet sein und grundsätzlich aus jedem anderen Kunststoff oder Kombination von Kunststoffen hergestellt sein, z.B. aus wenigstens einem Duroplasten und/oder wenigstens einem Thermoplasten usw..

Das z.B. übrige Befestigungsleistenelement 12 mit seinem wenigstens einen Befestigungsmodul 14, 15, 16 und wahlweise zusätzlich wenigstens einen Verbindungsabschnitt 18 ist in dem Ausführungsbeispiel in den Fig. 1-15 nicht weich oder elastisch sondern z.B. aus einem festen oder harten Kunststoff oder Kunststoffkombination, z.B. aus wenigstens einem Thermoplast und/oder aus wenigstens einem Duroplast, hergestellt . Die Erfindung ist jedoch auf die Beispiele von Kunststoffen und Kombinationen von Kunststoffen nicht beschränkt. Es kann jeder Kunststoff oder jede Kombination von Kunststoffen für das Befestigungsleistenelement 12, seine Funktionsabschnitte 17, sein wenigstens eines Befestigungsmodul 14, 15 16 und/oder seinen wenigstens einen Verbindungsabschnitt 18 usw. vorgesehen werden, je nach Funktion und Einsatzweck.

Dem Kunststoff oder der Kombination aus wenigstens zwei Kunststoffen aus denen der wenigstens eine Funktionsabschnitt hergestellt ist und/oder dem Kunststoff oder der Kombination aus wenigstens zwei Kunststoffen aus dem z.B. das übrige Befestigungsleistenelement 12 mit seinem wenigstens einen Befestigungsmodul 14, 15, 16 und optional wenigstens einen Verbindungsabschnitt 18 hergestellt ist, kann bzw. können wahlweise zusätzlich wenigstens ein Additiv und/oder wenigstens ein Füllstoff hinzugefügt sein. Beispielsweise können als Füllstoff Fasern, wie z.B. Glasfasern, usw., eingesetzt werden, um ein faserverstärktes Kunststoffspritzgussteil als Befestigungsleistenelement 12 bereitzustellen.

Das Schalenelement 13 ist in dem Ausführungsbeispiel in den Fig. 1-15 als die Außenschale, hier Außenschale der Wasserabweiserleiste, ausgebildet. Die Erfindung ist jedoch nicht auf die Außenschale einer Wasserabweiserleiste eines Fahrzeugs 1 beschränkt. Stattdessen kann das Schalenelement 13 als jede Art von Schalenelement für eine Fahrzeug-Leistenvorrichtung 2 und deren Befestigungsleistenelement 12 bei einem Fahrzeug 1, insbesondere Kraftfahrzeug, ausgebildet sein. Die erfindungsgemäße Fahrzeug-Leistenvorrichtung 2 kann neben einer Wasserabweiserleiste ebenso auch als Dachleiste, als Fahrzeug- und insbesondere Zierleiste der Fahrzeugtür, der A-, B-, C- oder D-Säule, des Fahrzeughecks, der Fahrzeugfront, des Fahrzeug-Kotflügels, des Fahrzeugheckflügels, der Fahrzeugscheinwerfereinfassung oder der Fahrzeugfenstereinfassung usw. ausgebildet sein, je nach Funktion und Einsatzzweck der Fahrzeug-Leistenvorrichtung 2.

Das Schalenelement 13 ist dabei ebenfalls als Spritzgussteil und vorzugsweise als Einkomponenten (1K)-Spritzgussteil ausgebildet. Dem Kunststoff oder der Kombination aus wenigstens zwei Kunststoffen des Spritzgussteils kann bzw. können ebenfalls wahlweise zusätzlich wenigstens ein Additiv und/oder wenigstens ein Füllstoff hinzugefügt sein. Beispielsweise können als Füllstoff Fasern, wie z.B. Glasfasern, usw., eingesetzt werden, um ein faserverstärktes Kunststoffspritzgussteil als Schalenelement 13 bereitzustellen. Das Schalenelement 13 und das Befestigungsleistenelement 12 als Kunststoffspritzgussteile haben den Vorteil beispielsweise gegenüber Extrusionsteilen, dass das Spritzgießen eine nahezu freie Wahl von Form und Oberflächenstruktur erlaubt, darunter z.B. glatte oder glänzende Oberflächen, Narbungen, Muster, Gravuren, Farbeffekte usw.. Das Schalenelement 13 kann statt als Einkomponenten (1K)-Kunststoffspritzgussteil auch als Mehrkomponenten-Kunststoffspritzgussteil, z.B. als Zwei- oder Dreikomponenten Kunststoffspritzgussteil ausgebildet sein. Umgekehrt kann das Befestigungsleistenelement 12, wie zuvor ausgeführt, sowohl als Einkomponenten (1K)-Kunststoffspritzgussteil sowie auch als Mehrkomponenten-Kunststoffspritzgussteil, z.B. als Dreikomponenten Kunststoffspritzgussteil usw., ausgebildet sein, je nachdem ob beispielsweise der wenigstens eine Funktionsabschnitt 17, das wenigstens eine Befestigungsmodul 14, 15, 16, der wenigstens eine Verbindungsabschnitt 18 und/oder das übrige Befestigungsleistenelement 12 aus demselben Kunststoff oder aus derselben Kombination von Kunststoffen oder aus unterschiedlichen Kunststoffen oder aus unterschiedlichen Kombination von Kunststoffen hergestellt werden.

Des Weiteren wird das Schalenelement 13 der erfindungsgemäßen Fahrzeug-Leistenvorrichtung 2 beispielsweise mit einer glänzenden Oberfläche, insbesondere zumindest auf der Sichtseite des Schalenelements 13, hergestellt. Die Sichtseite des Schalenelements 13 befindet sich dabei auf der Außenseite des Schalenelements 13. In montiertem Zustand der Fahrzeug-Leistenvorrichtung 2 an dem Fahrzeug 1 befindet sich die Außenseite und dem entsprechend die Sichtseite des Schalenelements 13 auf der Außenseite des Fahrzeugs 1, wie in Fig. 1 gezeigt ist.

Zur Erzielung der glänzenden Oberfläche zumindest im Sichtbereich des Schalenelements 13 ist das KunststoffSpritzgussteil mit einer geeignet glänzenden, insbesondere hochglänzenden Folie oder einem geeigneten Foliensystem beschichtet und/oder lackiert usw.. Als Kunststoff zur Herstellung des Schalenelements 13 kann beispielsweise Polymethylmethacrylat (PMMA) und/oder Polycarbonat (PC) eingesetzt werden. Die Erfindung ist aber auf die genannten Kunststoffe oder Kombination von Kunststoffen nicht beschränkt.

Die Erfindung ist außerdem nicht darauf beschränkt das Schalenelement 13 zumindest auf seiner Sichtseite mit einer glänzenden Oberfläche herzustellen. Je nach Funktion und Einsatzzeck kann das Schalenelement 13 auch eine andere Oberfläche oder Kombination von verschiedenen Oberflächenbereichen aufweisen, einschließlich wenigstens eines matten und/oder strukturierten Oberflächenbereichs, beispielsweise einer matten und/oder strukturierten Oberfläche z.B. zumindest auf der Sichtseite des Schalenelements 13, je nach Funktion und Einsatzzweck der Fahrzeug-Leistenvorrichtung 2.

Je nach Funktion und Einsatzzweck kann auch das Befestigungsleistenelement 12 wenigstens einen Oberflächenbereich aufweisen, der beispielsweise glänzend, insbesondere hochglänzend, matt und/oder strukturiert ist.

In Fig. 6 ist eine Perspektivansicht der Fahrzeug-Leistenvorrichtung 2 von der Seite und in Fig. 7 von oben gezeigt. Dabei ist in insbesondere das Schalenelement 13 und das Befestigungsleistenelement 12 mit seinem Verbindungsabschnitt 18, hier Endkappenabschnitt 19 an seinem ersten Längsende 5", gezeigt.

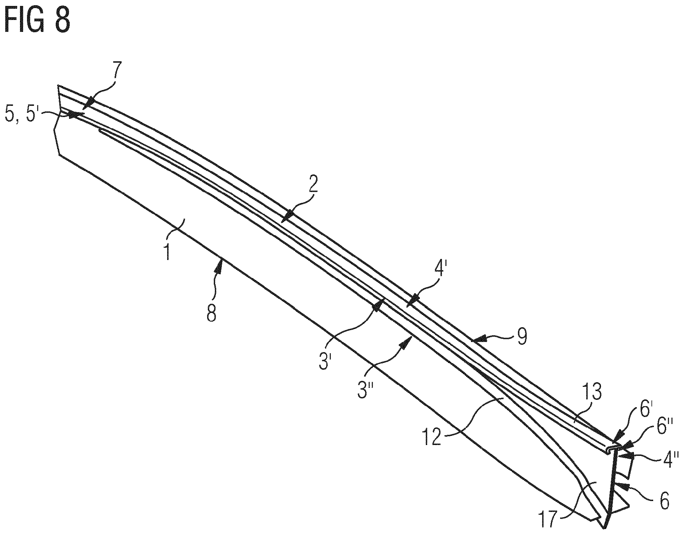

Zur Erläuterung der Verbindung des Schalenelements 13 und des Befestigungsleistenelement 12 sind verschiedene Schnittansichten der Fahrzeug-Leistenvorrichtung 2 in den Fig. 8 bis 15 gezeigt.

In Fig. 8 ist zunächst eine Perspektivansicht der Fahrzeug-Leistenvorrichtung 2 gemäß Fig. 3 gezeigt und insbesondere die Anbindung der Fahrzeug-Leistenvorrichtung 2 als Wasserabweiserleiste zur Windschutzscheibe 8, zur Fahrzeugkarosserie, hier zur Fahrzeug-Seitenwand 9, und zur Dachleiste 7.

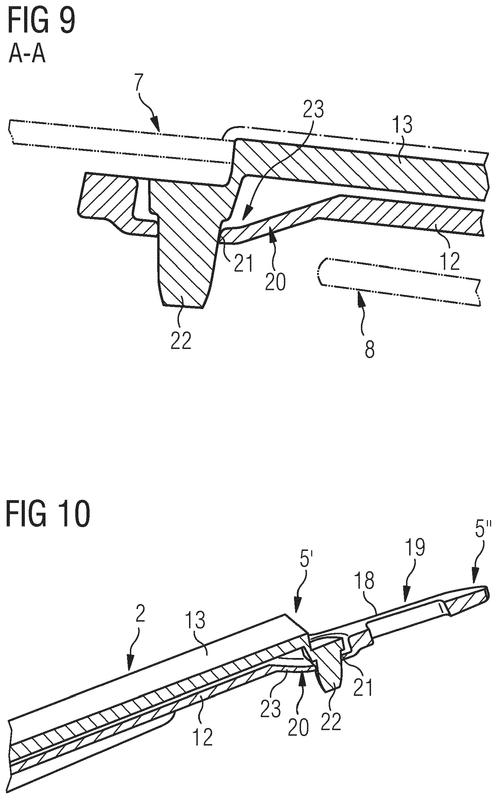

In Fig. 9 ist eine Schnittansicht A-A im Bereich des Verbindungsabschnitts 18 der Fahrzeug-Leistenvorrichtung 2 gemäß Fig. 6 und in Fig. 10 ein Ausschnitt der Fahrzeug-Leistenvorrichtung 2 im Bereich des Verbindungsabschnitts 18 als Längsschnitt gezeigt. Der Verbindungsabschnitt 18 befindet sich dabei in dem Ausführungsbeispiel in den Fig. 1-15 an dem ersten Längsende 5 der Fahrzeug-Leistenvorrichtung 2.

Das Befestigungsleistenelement 12 weist zur Positionierung und wahlweise zusätzlich zur Befestigung des Schalenelements 13 an seinem ersten Längsende 5" eine Aufnahme 20 auf, die derart ausgebildet ist das erste Längsende 5` des Schalenelements 13 aufzunehmen und gegenüber dem ersten Längsende 5" des Befestigungsleistenelements 12 zu positionieren und wahlweise zusätzlich an diesem zu befestigen.

Die Aufnahme 20 weist dazu beispielsweise eine Öffnung 21 auf, in welcher ein zu der Öffnung 21 korrespondierender Vorsprung 22 des Längsendes 5' des Schalenelements 13 aufnehmbar und wahlweise z.B. zusätzlich einklemmbar und/oder einrastbar ist. Der Vorsprung 22 ist beispielsweise als Zapfen ausgebildet und die Öffnung 21 als Bohrung, in welcher der Zapfen formschlüssig und wahlweise zusätzlich einklemmbar und/oder einrastbar aufnehmbar ist. Des Weiteren kann die Aufnahme 20 als Vertiefung 23 und mit der Öffnung 21 in der Vertiefung 23 ausgebildet sein, wie in den Fig. 9 und 10 beispielhaft gezeigt ist.

Die Kombination aus Aufnahme 20 und Vorsprung 22 hat den Vorteil, dass das Schalenelement 13 mit seinem einen Längsende 5' gegenüber dem Befestigungsleistenelement 12 positionierbar ist und dadurch nicht ungewollt in Längsrichtung und Querrichtung gegenüber dem Befestigungsleistenelement 12 verschieblich ist. Dadurch wird außerdem die Montage von Schalenelement und Befestigungsleistenelement vereinfacht und eine fehlerhafte Montage verhindert. Insbesondere wird verhindert, dass das erste Längsende 5` des Schalenelements 13 mit dem zweiten Längsende 6" des Befestigungsleistenelements 12 verbunden wird und umgekehrt.

In dem in Fig. 9 und 10 gezeigten Beispiel ist das erste Längsende 5' des Schalenelements 13 derart an seiner Außenseite abgestuft ausgebildet, dass das Schalenelement 13 mit seinem abgestuften Längsende 5' in montiertem Zustand mit der Oberseite der Aufnahme 20 bündig ist, so dass beispielsweise eine nachfolgende Leiste, hier z.B. die Dachleiste 7, oberhalb der Aufnahme 20 und dem abgestuften Längsende 5' angeordnet werden kann und mit der Außenseite und Sichtseite des Schalenelements 13 beispielsweise bündig ist. Der Endkappenabschnitt 19 des Befestigungsleistenelements 12 ist dabei ebenfalls unterhalb der Dachleiste 7 angeordnet und kann nicht nur unter die Dachleiste 7 in diese eingeschoben, sondern an dieser wahlweise zusätzlich befestigt werden, z.B. durch Verklemmen und/oder Einrasten an der Unterseite der Dachleiste 7.

Wie zuvor beschrieben, dient der Endkappenabschnitt 19 als Übergang zu einer weiteren Leiste, hier z.B. der Dachleiste 7. Die Dachleiste 7 ist in Fig. 9 mit einer doppeltstrichpunktierten Linie eingezeichnet.

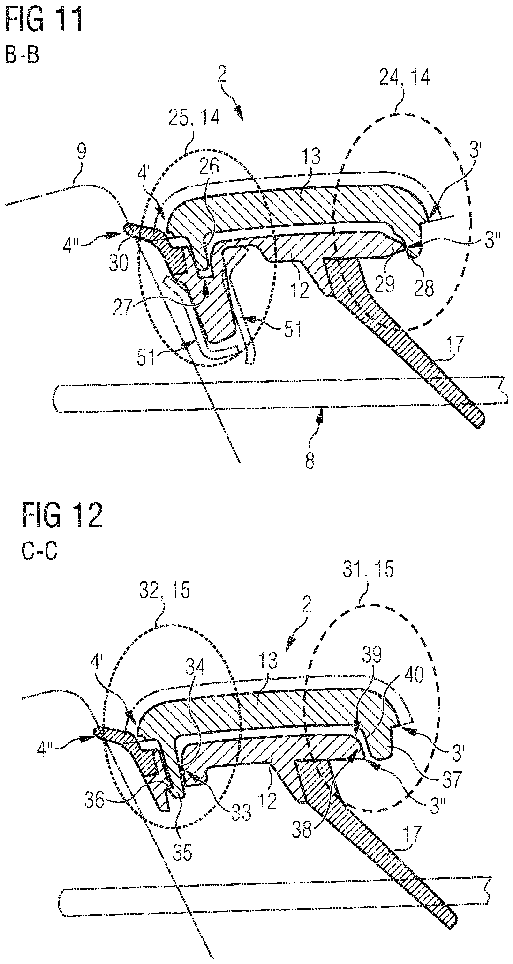

In Fig. 11 ist eine Schnittansicht B-B der Fahrzeug-Leistenvorrichtung 2 gemäß Fig. 7 gezeigt. Dabei ist das erste Befestigungsmodul 14 des Befestigungsleistenelements 12 und des Schalenelements 13 gezeigt.

Das Befestigungsmodul, hier das erste Befestigungsmodul 14, setzt sich dabei aus einem ersten Befestigungsabschnitt 24 auf der ersten Längsseite 3', 3" des Schalenelements 13 und des Befestigungsleistenelements 12 und einem zweiten Befestigungsabschnitt 25 auf der zweiten Längsseite 4', 4" des Schalenelements 13 und des Befestigungsleistenelements 12 zusammen. Dies gilt für alle Befestigungsmodule, einschließlich der im Folgenden noch erläuterten zweiten und dritten Befestigungsmodule 15 und 16.

Der erste und der zweite Befestigungsabschnitt 24, 25 des Befestigungsmoduls, hier z.B. ersten Befestigungsmoduls 14, können dabei in Längsrichtung der Fahrzeug-Leistenvorrichtung 2 einander gegenüberliegende oder in Längsrichtung zu einander versetzt vorgesehen sein, wobei bei einer zueinander versetzten Anordnung sich der erste und der zweite Befestigungsabschnitt 24, 25 in Längsrichtung der Fahrzeug-Leistenvorrichtung 2 gegenseitig überlappen oder alternativ nicht gegenseitig überlappen können.

Zur Bereitstellung des zweiten Befestigungsabschnitts 25 von Schalenelement 13 und Befestigungsleistenelement 12, weist das Schalenelement 13 auf der Unterseite an seiner zweiten Längsseite 4' einen Vorsprung 26, z.B. einen Stift bzw. Zapfen oder eine Rippe auf usw.. Das Befestigungsleistenelement 12 weist wiederum auf seiner zweiten Längsseite 4" eine zu dem Vorsprung 26 des Schalenelements 13 korrespondierende Aufnahme 27, hier in Form einer Vertiefung oder Öffnung (nicht dargestellt) auf, in welcher der Vorsprung 26 des Schalenelements 13 aufnehmbar und einklemmbar ist.

Zum Einklemmen des Vorsprungs 26 in der Aufnahme 27, weist als erster Befestigungsabschnitt 24 das Schalenelement 13 an seiner ersten Längsseite 3' eine Hinterschneidung 28 auf, beispielsweise in Form eines hakenförmigen Abschnitts. Der hakenförmige Abschnitt ist derart ausgebildet und erstreckt sich von der Unterseite des Schalenelements 13 nach unten weg, dass er einen zugeordneten Klemmabschnitt 29 an der ersten Längsseite 3" des Befestigungsleistenelements 12 umgreifen oder an diesem Klemmabschnitt 29 der ersten Längsseite 3" unterhaken kann. Durch das Umgreifen oder Unterhaken wird das Schalenelement 13 dabei mit seinem Vorsprung 26 in die Aufnahme 27 des Befestigungsleistenelements auf der zweiten Längsseite 4' bzw. 4" gleichzeitig eingeklemmt. Bei dem ersten Befestigungsabschnitt 24 ist der Klemmabschnitt 29 an der ersten Längsseite 3" des Befestigungsleistenelements 12 beispielweise zusätzlich sich nach außen in Querrichtung verjüngen oder spitz zulaufend ausgebildet, wie in Fig. 11 gezeigt ist, zum leichteren Unterhaken oder Hintergreifen durch die dazu korrespondierende Hinterschneidung 28 des Schalenelements 13.

In Fig. 11 ist außerdem der erste Funktionsabschnitt der Fahrzeug-Leistenvorrichtung an der ersten Längsseite 3" des Befestigungsleistenelements 12 ausgebildet gezeigt, hier der Wasserabweiserabschnitt 17. Dieser ist derart ausgebildet, um Wasser, insbesondere bei Betätigen der Schweibenwischeranlage nach oben bzw. zu dem erste Längsende 5 der Fahrzeug-Leistenvorrichtung 2 zu leiten und damit zum Dach und weg von den Seitenfenstern und Spiegeln des Fahrzeugs.

Das Befestigungsleistenelement 12 weist einen weiteren zweiten Funktionsabschnitt auf, beispielsweise in Form eine Lippe 30, beispielsweise einer Gummilippe. Der zweite Funktionsabschnitt ist dabei als Übergangsabschnitt der Fahrzeug-Leistenvorrichtung 2 und insbesondere deren Befestigungsleistenelement 12 zu der Karosserie, hier Fahrzeug-Seitenwand 9 oder A-Säule in Fig. 1 ausgebildet. Der erste und zweite Funktionsabschnitt, hier der Wasserabweiserabschnitt 18 und die Lippe 30, können beide aus demselben Kunststoff oder derselben Kunststoffkombination, z.B. einem Elastomer, hergestellt sein oder aus unterschiedlichen Kunststoffen oder unterschiedlichen Kunststoffkombinationen, je nachdem nach Funktion und Einsatzzweck des jeweilige Funktionsabschnitts.

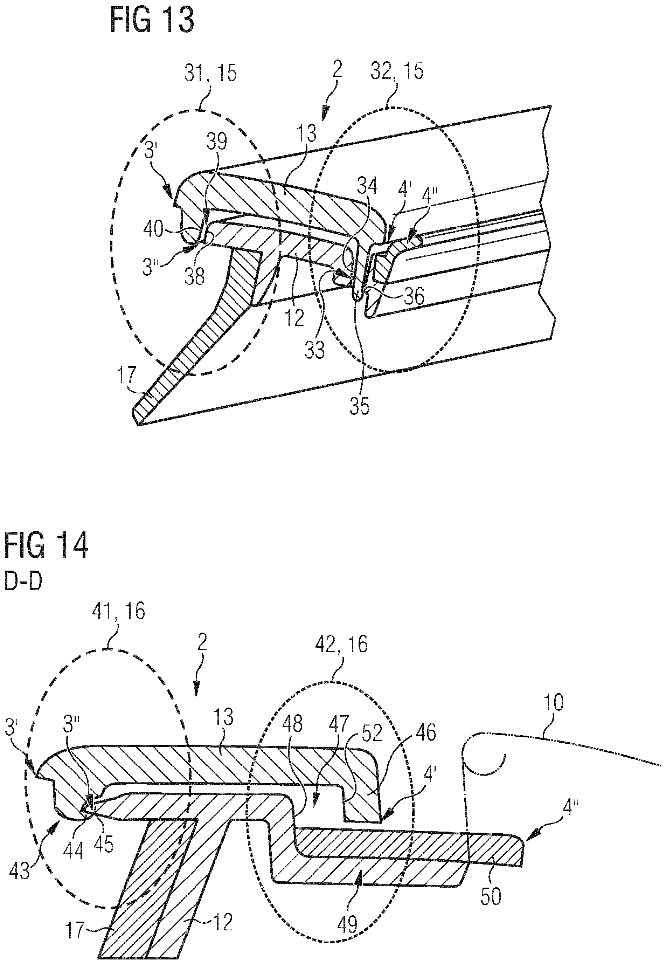

In Fig. 12 ist eine Schnittansicht C-C der Fahrzeug-Leistenvorrichtung 2 gemäß Fig. 7 gezeigt und in Fig. 13 eine Perspektivansicht des Bereichs des Schnitts C-C der Fahrzeug-Leistenvorrichtung 2 gemäß Fig. 7.

Dabei ist in den Fig. 12 und 13 das zweite Befestigungsmodul 15 des Befestigungsleistenelements 12 und des Schalenelements 13 gezeigt. Wie zuvor ausgeführt, setzt sich das zweite Befestigungsmodul 15 aus einem ersten Befestigungsabschnitt 31 auf der ersten Längsseite 3', 3" des Schalenelements 13 und des Befestigungsleistenelements 12 und einem zweiten Befestigungsabschnitt 32 auf der zweiten Längsseite 4', 4" des Schalenelements 13 und des Befestigungsleistenelements 12 zusammen .

Zur Bereitstellung des zweiten Befestigungsabschnitts 32 von Schalenelement 13 und Befestigungsleistenelement 12, weist das Befestigungsleistenelement 12 an seiner zweiten Längsseite 4" eine Aufnahme 33 mit einer Öffnung 34 auf, in welcher ein Rastelement 35, welches an der zweiten Längsseite 4` des Schalenelement 13 an dessen Unterseite ausgebildet ist, aufgenommen und eingerastet wird. Die Öffnung 34 ist dabei beispielsweise als eine Durchgangsöffnung ausgebildet, wobei die Öffnung 34 bzw. hier Durchgangsöffnung optional eine zusätzliche Hinterschneidung 36 aufweist, an welcher das Rastelement 35 einrastbar ist. Das Rastelement 35 ist dabei beispielsweise als Rasthaken ausgebildet.

Zur Bereitstellung des ersten Befestigungsabschnitts 31 von Schalenelement 13 und Befestigungsleistenelement 12, weist das Schalenelement 13 an seiner ersten Längsseite 3' einen sich nach unten erstreckenden Positionierungs-Vorsprung 37 zur Positionierung des Schalenelements 13 auf dem Befestigungsleistenelement 12 auf. In dem in Fig. 12 und 13 gezeigten Ausführungsbeispiel liegt dieser Positionierungs-Vorsprung 37 dabei nicht an der Außenkante 38 des Befestigungsleistenelements 12 auf dessen ersten Längsseite 3" an. Stattdessen ist ein Spalt 39 zwischen der Außenkante 38 des Befestigungsleistenelements 12 und der gegenüberliegenden Innenkante 40 des Vorsprungs des Schalenelements 13 vorhanden. Dieser Spalt 39 hat den Vorteil, dass ggf. Fertigungs- und Montagetoleranzen ausgeglichen werden können. Grundsätzlich kann aber ebenso auch kein Spalt vorgesehen werden.

In Fig. 14 ist eine Schnittansicht D-D der Fahrzeug-Leistenvorrichtung 2 gemäß Fig. 6 gezeigt.

Dabei ist in Fig. 14 das dritte Befestigungsmodul 16 des Befestigungsleistenelements 12 und des Schalenelements 13 gezeigt. Wie zuvor ausgeführt, setzt sich das dritte Befestigungsmodul 16 aus einem ersten Befestigungsabschnitt 41 auf der ersten Längsseite 3', 3" des Schalenelements 13 und des Befestigungsleistenelements 12 und einem zweiten Befestigungsabschnitt 42 auf der zweiten Längsseite 4', 4" des Schalenelements 13 und des Befestigungsleistenelements 12 zusammen .

Das dritte Befestigungsmodul 16 liegt hierbei z.B. im Bereich des zweiten Längsendes 6 der Fahrzeug-Leistenvorrichtung 2 und damit in Richtung der Motorhaube 10 des Fahrzeugs 1 in Fig. 1.

Zur Bereitstellung des zweiten Befestigungsabschnitts 42 von Schalenelement 13 und Befestigungsleistenelement 12, weist das Schalenelement 13 auf seiner zweiten Längsseite 4' an seiner Unterseite einen sich nach unten erstreckenden Positionierungs-Vorsprung 46 zur Positionierung des Schalenelements 13 auf dem Befestigungsleistenelement 12 auf. In dem in Fig. 14 gezeigten Ausführungsbeispiel liegt dieser Positionierungs-Vorsprung 46 dabei nicht an der Außenkante 48 des Befestigungsleistenelements 12 an dessen zweiter Längsseite 4" an. Stattdessen ist ein Spalt 47 zwischen der Außenkante 48 des Befestigungsleistenelements 12 auf dessen zweiter Längsseite 4" und der gegenüberliegenden Innenkante 52 des Positionierungs-Vorsprungs 46 des Schalenelements 13 vorhanden. Dieser Spalt 47 hat den Vorteil, dass ggf. Fertigungs- und Montagetoleranzen ausgeglichen werden können. Grundsätzlich kann aber ebenso auch kein Spalt vorgesehen werden.

Zur Bereitstellung des ersten Befestigungsabschnitts 41 von Schalenelement 13 und Befestigungsleistenelement 12, weist das Schalenelement 13 einen Vorsprung 43 mit einer Hinterschneidung 44 auf, beispielsweise in Form eines hakenförmigen Abschnitts. Der hakenförmige Abschnitt ist derart ausgebildet und erstreckt sich von der Unterseite des Schalenelements 13 nach unten weg, dass er einen Klemmabschnitt 45 des Befestigungsleistenelements 12 an dessen erster Längsseite 3" umgreifen oder an diesem Klemmabschnitt 45 an der ersten Längsseite 3" unterhaken kann.

Wie in Fig. 14 gezeigt ist, erstreckt sich der erste Funktionsabschnitt, hier der Wasserabweiserabschnitt 17, entlang der ersten Längsseite 3" des Befestigungsseitenelements 12, d.h. in eingebautem Zustand entlang der Windschutzscheibe 8, bis hin zu dem zweiten Längsende 6" und damit bis zum Bereich der Motorhaube 10. Das Befestigungsleistenelement 12 weist an seiner zweiten Längsseite 4" und im Bereich des zweiten Längsendes 6" einen dritten Funktionsabschnitt auf. Dieser dritte Funktionsabschnitt ist als Übergang von der Fahrzeug-Leistenvorrichtung 2 zu der Motorhaube und Wasserkastenabdeckung 10 des Fahrzeugs 1 wie z.B. in Fig. 1 ausgebildet. Das Befestigungsleistenelement 12 ist an seiner zweiten Längsseite 4" und im Bereich seines zweiten Längsendes 6" in dem in Fig. 14 gezeigten Ausführungsbeispiel mit einem abgestuften Abschnitt 49 ausgebildet, auf dessen Oberseite der dritte Funktionsabschnitt z.B. in Form einer Lippe, insbesondere Gummilippe, aus beispielsweise wenigstens einem Elastomer als Kunststoff ausgebildet ist. Die Lippe 50 und insbesondere Gummilippe ist dabei als Übergang der Fahrzeug-Leistenvorrichtung 2 zur der Motorhaube 10 des Fahrzeug in Fig. 1 ausgebildet.

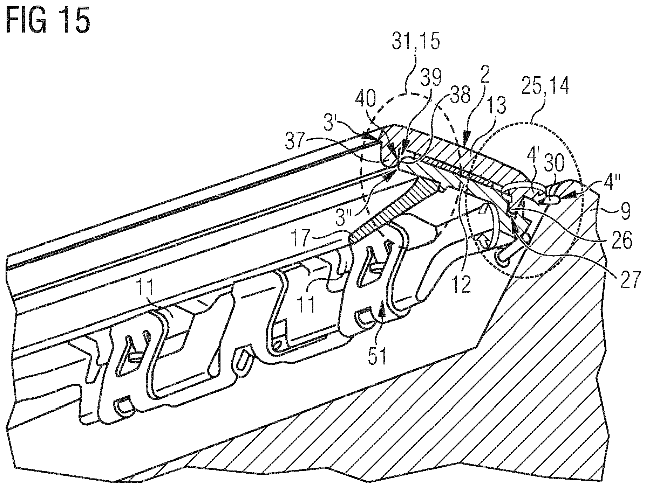

In Fig. 15 ist eine Perspektivansicht eines Ausschnitts der Fahrzeug-Leistenvorrichtung 2 und ihrer Befestigung an der Fahrzeug-Seitenwand 9 in der Nähe des Bereichs des zuvor in den Fig. 7 und 11 gezeigten Schnitts B-B dargestellt. Dabei ist die Karosserie und insbesondere die Seitenwand 9 und genauer ein Teil der A-Säule des Fahrzeugs 1 aus Fig. 1 gezeigt. Des Weiteren ist die Fahrzeug-Leistenvorrichtung 2 mit ihrem Befestigungsleistenelement 12 und dem daran befestigten Schalenelement 13 gezeigt.

Dabei ist außerdem jeweils ein Teil des ersten Befestigungsmoduls 14 und des zweiten Befestigungsmoduls 15 des Befestigungsleistenelements 12 und des Schalenelements 13 gezeigt.

Genauer ist in Fig. 15 der zweite Befestigungsabschnitt 25 des ersten Befestigungsmoduls 14 gezeigt. Dabei weist das Schalenelement 13 auf seiner zweiten Längsseite 4', 4" auf der Unterseite den Vorsprung 26 auf, welcher wiederum in der dazu korrespondierenden Aufnahme 27 auf der zweiten Längsseite 4" des Befestigungsleistenelements 12 aufgenommen und einklemmt ist mittels des ersten Befestigungsabschnitts 24 des ersten Befestigungsmoduls 14.

Des Weiteren ist in dem in Fig. 15 gezeigten Bereich der erste Befestigungsabschnitt 31 des zweiten Befestigungsmoduls 15 gezeigt, wie es zuvor mit Bezug auf die Fig. 12 und 13 erläutert wurde. Bei dem ersten Befestigungsabschnitt 31 des zweiten Befestigungsmoduls 15 weist das Schalenelement 13 an seiner ersten Längsseite 3' den sich nach unten erstreckenden Positionierungs-Vorsprung 37 zur Positionierung des Schalenelements 13 auf dem Befestigungsleistenelement 12 auf. In dem in Fig. 15 und zuvor in den Fig. 12 und 13 gezeigten Ausführungsbeispiel liegt dieser Positionierungs-Vorsprung 37 dabei nicht an der Außenkante 38 des Befestigungsleistenelements 12 auf dessen erster Längsseite 3" an. Stattdessen ist der Spalt 39 zwischen der Außenkante 38 des Befestigungsleistenelements 12 auf dessen ersten Längsseite 3" und der gegenüberliegenden Innenkante 40 des Positionierungs-Vorsprungs 37 des Schalenelements 13 vorhanden.

Wie aus Fig. 15 entnommen werden kann, können der jeweils erste und zweite Befestigungsabschnitt 24, 25; 31, 32; 41, 42 eines Befestigungsmoduls 14, 15, 16 in der Längsrichtung der Fahrzeug-Leistenvorrichtung 2 gegenüberliegend oder zueinander versetzt angeordnet sein. Bei einer zueinander versetzten Anordnung des ersten und zweiten Befestigungsabschnitts 24, 25; 31, 32; 41, 42 eines Befestigungsmoduls 14, 15, 16, können die beiden ersten und zweiten Befestigungsabschnitte 24, 25; 31, 32; 41, 42 sich einander überlappen oder ohne miteinander zu überlappen versetzt zueinander in Längsrichtung der Fahrzeug-Leistenvorrichtung 2 angeordnet sein.

Dabei können, wie an dem Beispiel in Fig. 15 gezeigt ist, auch ein erster und zweite Befestigungsabschnitt 31, 25 von zwei verschiedenen Befestigungsmodulen 14, 15 miteinander in Längsrichtung der Fahrzeug-Leistenvorrichtung 2 zumindest teilweise zusätzlich überlappen. Auf diese Weise können die ersten und zweiten Befestigungsabschnitte 24, 25; 31, 32; 41, 42 des ersten, zweiten und/oder dritten Befestigungsmoduls 14, 15, 16 entlang der Längsrichtung der Fahrzeug-Leistenvorrichtung 2 und deren Schalenelement 13 und Befestigungsleistenelement 12 beliebig miteinander kombiniert werden.

In Fig. 15 ist aber auch die Anbindung der erfindungsgemäßen Fahrzeug-Leistenvorrichtung 2 an die Karosserie und hier die Seitenwand 9 und insbesondere A-Säule des Fahrzeugs 1 aus Fig. 1 gezeigt.

Dazu weist das Befestigungsleistenelement 12 beispielsweise entlang seiner zweiten Längsseite 3" wenigstens eine oder mehrere Öffnung 11 und/oder Vertiefungen (nicht dargestellt) auf, z.B. paarweise Öffnungen 11, wie sie in Fig. 15 und zuvor in Fig. 2 gezeigt sind, zum Befestigen von Klammereinrichtungen 51 in der jeweiligen Öffnung 11 bzw. Vertiefung (nicht dargestellt) des Befestigungsleistenelements 12. Die Klammereinrichtungen 51 sind des Weiteren derart ausgebildet an der Karosserie, hier z.B. Seitenwand 9, befestigt zu werden. Mittels der Klammereinrichtungen 51, hier beispielsweise der in Fig. 15 gezeigten Metallklammern, kann die Fahrzeug-Leistenvorrichtung 2 an der Seitenwand 9 oder eine anderem Karosserieteil und insbesondere Karosserieblech befestigt werden, je nach Funktion und Einsatzzweck.

Die Erfindung ist jedoch nicht auf diese spezielle Form der Befestigung der erfindungsgemäßen Fahrzeug-Leistenvorrichtung an einer Fahrzeugkarosserie beschränkt. Es kann jede andere Befestigungseinrichtung oder Kombination von Befestigungseinrichtungen vorgesehen werden, die geeignet ist, die Fahrzeug-Leistenvorrichtung an der Fahrzeugkarosserie zu befestigen.

### Bezugszeichenliste

- 1: Fahrzeug
- 2: Fahrzeug-Leistenvorrichtung
- 3: Erste Längsseite (Windschutzscheibe)
- 4: Zweite Längsseite (Seitenwand)
- 5: Erstes Längende (Dachleiste)
- 6: Zweites Längsende (Motorhaube)
- 7: Dachleiste
- 8: Windschutzscheibe
- 9: Seitenwand
- 10: Motorhaube und Wasserkastenabdeckung
- 11: Öffnung (für Metallklammern)
- 12: Befestigungsleistenelement
- 13: Schalenelement
- 14: Erstes Befestigungsmodul
- 15: Zweites Befestigungsmodul
- 16: Drittes Befestigungsmodul
- 17: Wasserabweiserabschnitt (erster Funktionsabschnitt)
- 18: Verbindungsabschnitt
- 19: Endkappenabschnitt
- 20: Aufnahme (Schnitt A-A)
- 21: Öffnung
- 22: Vorsprung
- 23: Vertiefung
- 24: Erster Befestigungsabschnitt (auf erster Längsseite)
- 25: Zweiter Befestigungsabschnitt (auf zweiter Längsseite)
- 26: Vorsprung
- 27: Aufnahme
- 28: Hinterschneidung
- 29: Klemmabschnitt
- 30: Lippe (zweiter Funktionsabschnitt)
- 31: Erster Befestigungsabschnitt (auf erster Längsseite)
- 32: Zweiter Befestigungsabschnitt (auf zweiter Längsseite)
- 33: Aufnahme
- 34: Öffnung
- 35: Rastelement
- 36: Hinterschneidung (Öffnung)
- 37: Positionierungs-Vorsprung
- 38: Außenkante
- 39: Spalt
- 40: Innenkante (Vorsprung)
- 41: Erster Befestigungsabschnitt
- 42: Zweiter Befestigungsabschnitt
- 43: Vorsprung
- 44: Hinterschneidung
- 45: Klemmabschnitt
- 46: Positionierungs-Vorsprung
- 47: Spalt
- 48: Außenkante (Befestigungsleistenelement)
- 49: Abgestufter Abschnitt
- 50: Lippe (dritter Funktionsabschnitt)
- 51: Klammereinrichtung
- 52: Innenkante (Schalenelement)

## Patentansprüche

1. Fahrzeug-Leistenvorrichtung, wobei die Fahrzeug-Leistenvorrichtung (2) insbesondere eine Funktions- und/oder Zierleiste bei einem Kraftfahrzeug ist, wobei die Fahrzeug-Leistenvorrichtung (2) ein Schalenelement (13) und ein Befestigungsleistenelement (12) aufweist, welche mit wenigstens einem Befestigungsmodul (14, 15, 16) ausgeformt sind und mittels des wenigstens einen Befestigungsmoduls (14, 15, 16) aneinander befestigbar sind, wobei das Schalenelement (13) und das Befestigungsleistenelement (12) jeweils als Kunststoffspritzgussteil aus wenigstens einem Kunststoff ausgebildet sind,
wobei das Befestigungsleistenelement (12) eine Aufnahme (20) zum Aufnehmen eines Längsendes (5') des Schalenelements (13) und zum Positionieren des Schalenelements (13) gegenüber dem Befestigungsleistenelement (12) aufweist,
wobei die Aufnahme (20) eine Öffnung (21) und das Längsende (5') des Schalenelements (13) einen Vorsprung (22) aufweisen, wobei der Vorsprung (22) in der Öffnung (21) zum Aufnehmen des Längsendes (5') des Schalenelements (13) und zum Positionieren des Schalenelements (13) gegenüber dem Befestigungsleistenelement (12) aufnehmbar ist.

2. Fahrzeug-Leistenvorrichtung nach Anspruch 1,
**dadurch gekennzeichnet,**
**dass** das Schalenelement (13) und das Befestigungsleistenelement (12) durch Verrasten, Verklemmen und/oder Zusammenschieben durch das wenigstens eine Befestigungsmodul (14, 15, 16) aneinander befestigt sind.

3. Fahrzeug-Leistenvorrichtung nach Anspruch 1 oder 2,
**dadurch gekennzeichnet,**
**dass** das Befestigungsleistenelement (12) mit wenigstens einem Funktionsabschnitt (17, 30, 50) ausgeformt ist, insbesondere einem Wasserabweiserabschnitt (17), einer Lippe (30, 50), insbesondere Dichtungslippe und/oder Gummilippe.

4. Fahrzeug-Leistenvorrichtung nach einem der vorstehenden Ansprüche,
**dadurch gekennzeichnet,**
**dass** das Befestigungsleistenelement (12) mit einem Verbindungsabschnitt (18) ausgeformt ist, wobei der Verbindungsabschnitt (18) insbesondere ein Endkappenabschnitt (19) ist zum Verbinden der Fahrzeug-Leistenvorrichtung (2) mit einer weiteren Fahrzeugleiste, insbesondere einer Dachleiste (7).

5. Fahrzeug-Leistenvorrichtung nach einem der vorstehenden Ansprüche,
**dadurch gekennzeichnet,**
**dass** der Vorsprung (22) in der Öffnung (21) zusätzlich einklemmbar oder einrastbar ist zum Befestigen des Schalenelements (13) und des Befestigungsleistenelements (12) aneinander.

6. Fahrzeug-Leistenvorrichtung nach einem der vorstehenden Ansprüche,
**dadurch gekennzeichnet,**
**dass** das Befestigungsmodul (14, 15, 16) sich aus einem ersten Befestigungsabschnitt (24, 31, 41) auf einer ersten Längsseite (3', 3") des Schalenelements (13) und des Befestigungsleistenelements (12) und einem zweiten Befestigungsabschnitt (25, 32, 42) auf einer zweiten, gegenüberliegenden Längsseite (4', 4") des Schalenelements (13) und des Befestigungsleistenelements (12) zusammensetzt, wobei der erste Befestigungsabschnitt (24, 31, 41) und der zweite Befestigungsabschnitt (25, 32, 42) sich entlang zumindest entlang einer Teillänge oder über die gesamte Länge der Fahrzeug-Leistenvorrichtung (2) in Längsrichtung erstrecken und/oder wobei der erste und zweite Befestigungsabschnitt (24, 31, 41; 25, 32, 42) des Befestigungsmoduls (14, 15, 16) sich dabei vollständig oder teilweise in Längsrichtung der Fahrzeug-Leistenvorrichtung (2) überlappen.

7. Fahrzeug-Leistenvorrichtung nach einem der vorstehenden Ansprüche,
**dadurch gekennzeichnet,**
**dass** das Schalenelement (13) und das Befestigungsleistenelement (12) mit einem ersten Befestigungsmodul (14) ausgeformt sind,
wobei das erste Befestigungsmodul (14) sich aus einem ersten Befestigungsabschnitt (24) auf einer ersten Längsseite (3', 3") des Schalenelements (13) und des Befestigungsleistenelements (12) und einem zweiten Befestigungsabschnitt (25) auf einer zweiten, gegenüberliegenden Längsseite (4', 4") des Schalenelements (13) und des Befestigungsleistenelements (12) zusammensetzt,
wobei der erste Befestigungsabschnitt (24) aus einem Vorsprung und einer Hinterschneidung (28), insbesondere in Form eines hakenförmigen Abschnitts, des Schalenelements (13) und einem Klemmabschnitt (29) des Befestigungsleistenelements (12) gebildet ist, wobei der Klemmabschnitt (29) an der Hinterschneidung (28) untergehakt oder von dieser in montiertem Zustand der Fahrzeug-Leistenvorrichtung (2) umgriffen ist, und
wobei der zweite Befestigungsabschnitt (25) aus einem Vorsprung (26) an der Unterseite des Schalenelements (13) und einer zu dem Vorsprung (26) korrespondierenden Aufnahme (27) des Befestigungsleistenelements (12) gebildet ist, zum Aufnehmen und vorzugsweise zusätzlichen Einklemmen des Vorsprungs (26) in montiertem Zustand der Fahrzeug-Leistenvorrichtung (2) .

8. Fahrzeug-Leistenvorrichtung nach einem der vorstehenden Ansprüche,
**dadurch gekennzeichnet,**
**dass** das Schalenelement (13) und das Befestigungsleistenelement (12) mit einem zweiten Befestigungsmodul (15) ausgeformt sind,
wobei das zweite Befestigungsmodul (15) sich aus einem ersten Befestigungsabschnitt (31) auf einer ersten Längsseite (3', 3") des Schalenelements (13) und des Befestigungsleistenelements (12) und einem zweiten Befestigungsabschnitt (32) auf einer zweiten, gegenüberliegenden Längsseite (4', 4") des Schalenelements (13) und des Befestigungsleistenelements (12) zusammensetzt,
wobei der erste Befestigungsabschnitt (31) aus einem Positionierungs-Vorsprung (37) an der Unterseite des Schalenelements (13) und einem zugeordneten Bereich der Außenkante (38) des Befestigungsleistenelements (12) gebildet ist zum Positionieren des Schalenelements (13) mit seinem Positionierungs-Vorsprung (37) gegenüber dem Befestigungsleistenelement (12) in montiertem Zustand der Fahrzeug-Leistenvorrichtung (2), wobei vorzugsweise ein Spalt (39) zwischen der Außenkante (38) des Befestigungsleistenelements (12) und der gegenüberliegenden Innenkante (40) des Vorsprungs (37) des Schalenelements (13) vorgesehen ist, und
wobei der zweite Befestigungsabschnitt (32) aus einem Rastelement (35) an der Unterseite des Schalenelements (13) und einer zu dem Rastelement (35) korrespondierenden Aufnahme (33) des Befestigungsleistenelements (12) gebildet ist, zum Aufnehmen und Einrasten des Rastelements (35) in montiertem Zustand der Fahrzeug-Leistenvorrichtung (2), wobei die Aufnahme (33) vorzugsweise eine Öffnung (34) zum Einrasten des Rastelements (35) aufweist.

9. Fahrzeug-Leistenvorrichtung nach einem der vorstehenden Ansprüche,
**dadurch gekennzeichnet,**
**dass** das Schalenelement (13) und das Befestigungsleistenelement (12) mit einem dritten Befestigungsmodul (16) ausgeformt sind,
wobei das dritte Befestigungsmodul (16) sich aus einem ersten Befestigungsabschnitt (41) auf einer ersten Längsseite (3', 3") des Schalenelements (13) und des Befestigungsleistenelements (12) und einem zweiten Befestigungsabschnitt (42) auf einer zweiten, gegenüberliegenden Längsseite (4', 4") des Schalenelements (13) und des Befestigungsleistenelements (12) zusammensetzt,
wobei der erste Befestigungsabschnitt (41) aus einem Vorsprung (43) mit einer Hinterschneidung (44), insbesondere in Form eines hakenförmigen Abschnitts, des Schalenelements (13) und einem Klemmabschnitt (45) des Befestigungsleistenelements (12) gebildet ist, wobei der Klemmabschnitt (45) an dem Vorsprung (43) mit der Hinterschneidung (44) untergehakt oder von dieser umgriffen in montiertem Zustand der Fahrzeug-Leistenvorrichtung (2) ist, und
wobei der zweite Befestigungsabschnitt (42) aus einem Positionierungs-Vorsprung (46) an der Unterseite des Schalenelements (13) und einer zu dem Positionierungs-Vorsprung (46) und einem zugeordneten Bereich der Außenkante (48) des Befestigungsleistenelements (12) gebildet ist zum Positionieren des Schalenelements (3) mit seinem Positionierungs-Vorsprung (46) gegenüber dem Befestigungsleistenelement (12) in montiertem Zustand der Fahrzeug-Leistenvorrichtung (2), wobei vorzugsweise ein Spalt (47) zwischen der Außenkante (48) des Befestigungsleistenelements (12) und der gegenüberliegenden Innenkante (52) des Positionierungs-Vorsprungs (46) des Schalenelements (13) vorgesehen ist, wobei der zugeordnete Bereich der Außenkante (48) wahlweise zusätzlich einen abgestuften Abschnitt (49) aufweist auf dessen Oberseite dem Schalenelement (13) gegenüberliegenden ein Funktionsabschnitt ausgebildet ist, beispielsweise in Form einer Lippe (50), insbesondere einer Gummi- oder Dichtungslippe.

10. Fahrzeug-Leistenvorrichtung nach einem der vorstehenden Ansprüche,
**dadurch gekennzeichnet,**
**dass** der erste und zweite Befestigungsabschnitt (24, 31, 41; 25, 32, 42) wenigstens eines Befestigungsmoduls (14, 15, 16) einander gegenüberliegend an den Längsseiten (3', 3"; 4', 4") des Schalenelements (13) und des Befestigungsleistenelements (12) vorgesehen sind, wobei der erste und zweite Befestigungsabschnitt (24, 31, 41; 25, 32, 42) sich dabei zumindest teilweise oder vollständig überlappen.

11. Fahrzeug-Leistenvorrichtung nach einem der vorstehenden Ansprüche,
**dadurch gekennzeichnet,**
**dass** das Befestigungsleistenelement (12) mit wenigstens einer Aufnahme, insbesondere einer Öffnung (11), zum Aufnehmen und Befestigen, insbesondere Anclipsen oder Aufrasten, einer Klammereinrichtung (51) ausgebildet ist, wobei die Klammereinrichtung (51) derart ausgebildet ist, die Fahrzeug-Leistenvorrichtung (2) mit dem zugeordneten Fahrzeug und insbesondere dessen Fahrzeug-Karosserie zu verbinden und an diesem bzw. dieser vorzugsweise zu befestigen, beispielsweise an diesem bzw. dieser zu verclipsen oder aufzurasten.

12. Fahrzeug-Leistenvorrichtung nach einem der vorstehenden Ansprüche,
**dadurch gekennzeichnet,**
**dass** das Schalenelement (13) und/oder das Befestigungsleistenelement (12) als Einkomponenten-Spritzgussteil oder Mehrkomponenten Spritzgussteil, insbesondere Zwei- oder Dreikomponenten-Spritzgussteil, ausgebildet ist bzw. sind.

13. Fahrzeug (1), insbesondere Kraftfahrzeug,
mit wenigstens einer Fahrzeug-Leistenvorrichtung (2) nach einem der vorstehenden Ansprüche, wobei die Fahrzeugleisten-Vorrichtung (2) eine Wasserabweiserleiste ist, welche sich mit ihrer ersten Längsseite (3) entlang einer Windschutzscheibe (8) des Fahrzeugs (1) und mit ihrer zweiten Längsseite (4) entlang einer Seitenwand (9) des Fahrzeugs (1) erstreckt.

14. Fahrzeug nach Anspruch 13,
**dadurch gekennzeichnet,**
**dass** die Fahrzeugleisten-Vorrichtung (2) einen Verbindungsabschnitt (18) aufweist, wobei der Verbindungsabschnitt (18) als Endkappenabschnitt (19) an dem Befestigungsleistenelement (12) ausgeformt und mit einer zugeordneten Dachleiste (7) des Fahrzeugs (1) verbindbar und vorzugweise befestigbar ist.

## Claims

1. Vehicle strip device, the vehicle strip device (2) in particular being a functional and/or ornamental strip in a motor vehicle, the vehicle strip device (2) having a shell element (13) and a fastening strip element (12), which are formed with at least one fastening module (14, 15, 16) and can be fastened together using the at least one fastening module (14, 15, 16), the shell element (13) and the fastening strip element (12) each being formed as a plastics material injection-moulded part consisting of at least one plastics material,
wherein the fastening strip element (12) has a mounting (20) for receiving a longitudinal end (5') of the shell element (13) and for positioning the shell element (13) with respect to the fastening strip element (12),
wherein the mounting (20) has an opening (21) and the longitudinal end (5') of the shell element (13) has a projection (22), the projection (22) being receivable in the opening (21) for receiving the longitudinal end (5') of the shell element (13) and for positioning the shell element (13) with respect to the fastening strip element (12) .

2. Vehicle strip device according to claim 1,
**characterised**
**in that** the shell element (13) and the fastening strip element (12) are fastened together by latching, clamping and/or sliding together by way of the at least one fastening module (14, 15 16) .

3. Vehicle strip device according to either claim 1 or claim 2,
**characterised**
**in that** the fastening strip element (12) is formed with at least one functional portion (17, 30, 50), in particular a water deflector portion (17), a lip (30, 50), in particular a sealing lip and/or rubber lip.

4. Vehicle strip device according to any of the preceding claims,
**characterised**
**in that** the fastening strip element (12) is formed with a connecting portion (18), the connecting portion (18) in particular being an end cap portion (19) for connecting the vehicle strip device (2) to a further vehicle strip, in particular a roof strip (7).

5. Vehicle strip device according to any of the preceding claims,
**characterised**
**in that** the projection (22) can additionally be clamped or latched in the opening (21) to fasten the shell element (13) and fastening strip element (12) together.

6. Vehicle strip device according to any of the preceding claims,
**characterised**
**in that** the fastening module (14, 15, 16) is composed of a first fastening portion (24, 31, 41) on a first longitudinal face (3', 3") of the shell element (13) and fastening strip element (12) and of a second fastening portion (25, 32, 42) on a second, opposite longitudinal face (4', 4") of the shell element (13) and fastening strip element (12), the first fastening portion (24, 31, 41) and the second fastening portion (25, 32, 42) extending along at least part of the length or the entire length of the vehicle strip device (2) in the longitudinal direction, and/or the first and second fastening portion (24, 31, 41; 25, 32, 42) of the fastening module (14, 15, 16) overlapping in whole or in part in the longitudinal direction of the vehicle strip device (2).

7. Vehicle strip device according to any of the preceding claims,
**characterised**
**in that** the shell element (13) and the fastening strip element (12) are formed with a first fastening module (14), the first fastening module (14) being composed of a first fastening portion (24) on a first longitudinal face (3', 3") of the shell element (13) and fastening strip element (12) and of a second fastening portion (25) on a second, opposite longitudinal face (4', 4") of the shell element (13) and fastening strip element (12),
the first fastening portion (24) being formed from a projection and an undercut (28), in particular in the form of a hook-shaped portion, of the shell element (13) and from a clamping portion (29) of the fastening strip element (12), the clamping portion (29) being hooked underneath on the undercut (28) or being engaged around by said undercut in the mounted state of the vehicle strip device (2), and the second fastening portion (25) being formed from a projection (26) on the lower face of the shell element (13) and from a mounting (27), corresponding to the projection (26), of the fastening strip element (12), for receiving and preferably additionally clamping the projection (26) in the mounted state of the vehicle strip device (2).

8. Vehicle strip device according to any of the preceding claims,
**characterised**
**in that** the shell element (13) and the fastening strip element (12) are formed with a second fastening module (15),
the second fastening module (15) being composed of a first fastening portion (31) on a first longitudinal face (3', 3") of the shell element (13) and fastening strip element (12) and of a second fastening portion (32) on a second, opposite longitudinal face (4', 4") of the shell element (13) and fastening strip element (12),
the first fastening portion (31) being formed from a positioning projection (37) on the lower face of the shell element (13) and from an associated region of the outer edge (38) of the fastening strip element (12) to position the shell element (13) with the positioning projection (37) thereof against the fastening strip element (12) in the mounted state of the vehicle strip device (2), a gap (39) preferably being provided between the outer edge (38) of the fastening strip element (12) and the opposite inner edge (40) of the projection (37) of the shell element (13), and
the second fastening portion (32) being formed from a latch element (35) on the lower face of the shell element (13) and from a mounting (33), corresponding to the latch element (35), of the fastening strip element (12), to receive and latch the latch element (35) in the mounted state of the vehicle strip device (2), the mounting (33) preferably having an opening (34) for latching the latch element (35).

9. Vehicle strip device according to any of the preceding claims,
**characterised**
**in that** the shell element (13) and the fastening strip element (12) are formed with a third fastening module (16), the third fastening module (16) being composed of a first fastening portion (41) on a first longitudinal face (3', 3") of the shell element (13) and fastening strip element (12) and of a second fastening portion (42) on a second, opposite longitudinal face (4', 4") of the shell element (13) and fastening strip element (12),
the first fastening portion (41) being formed from a projection (43) having an undercut (44), in particular in the form of a hook-shaped portion, of the shell element (13) and from a clamping portion (45) of the fastening strip element (12), the clamping portion (45) being hooked underneath on the projection (43) having the undercut (44) or being engaged around by said undercut in the mounted state of the vehicle strip device (2), and
the second fastening portion (42) being formed from a positioning projection (46) on the lower face of the shell element (13) and from a region of the outer edge (48) of the fastening strip element (12) associated with the positioning projection (46), to position the shell element (3) with the positioning projection (46) thereof against the fastening strip element (12) in the mounted state of the vehicle strip device (2), a gap (47) preferably being provided between the outer edge (48) of the fastening strip element (12) and the opposite inner edge (52) of the positioning projection (46) of the shell element (13), the associated region of the outer edge (48) optionally additionally having a stepped portion (49), on the upper face of which a functional portion is formed opposite the shell element (13), for example in the form of a lip (50), in particular a rubber lip or sealing lip.

10. Vehicle strip device according to any of the preceding claims,
**characterised**
**in that** the first and second fastening portion (24, 31, 41; 25, 32, 42) of at least one fastening module (14, 15, 16) are provided opposite one another on the longitudinal faces (3', 3"; 4', 4") of the shell element (13) and fastening strip element (12), the first and second fastening portion (24, 31, 41; 25, 32, 42) overlapping at least in part or in whole.

11. Vehicle strip device according to any of the preceding claims,
**characterised**
**in that** the fastening strip element (12) is formed with at least one mounting, in particular an opening (11), for receiving and fastening, in particular clipping or latching, a clamp device (51), the clamp device (51) being formed so as to connect and preferably fasten, for example clip or latch, the vehicle strip device (2) to the associated vehicle and in particular to the vehicle body thereof

12. Vehicle strip device according to any of the preceding claims,
**characterised**
**in that** the shell element (13) and/or the fastening strip element (12) are formed as single-component injection-moulded parts or multi-component injection-moulded parts, in particular two-component or three-component injection moulded parts.

13. Vehicle (1), in particular motor vehicle,
comprising at least one vehicle strip device (2) according to any of the preceding claims, wherein the vehicle strip device (2) is a water deflector strip, the first longitudinal face (3) of which extends along a windscreen (8) of the vehicle (1) and the second longitudinal face (4) of which extends along a side wall (9) of the vehicle (1).

14. Vehicle according to claim 13,
**characterised**
**in that** the vehicle strip device (2) has a connecting portion (18), the connecting portion (18) being formed as an end cap portion (19) on the fastening strip element (12) and being connectable and preferably fastenable to an associated roof strip (7) of the vehicle (1).

## Revendications

1. Dispositif de baguette pour véhicule, dans lequel le dispositif de baguette pour véhicule (2) est en particulier une baguette fonctionnelle et/ou une baguette décorative dans un véhicule à moteur, dans lequel le dispositif de baguette pour véhicule (2) comporte un élément de coque (13) et un élément de baguette de fixation (12) qui sont formés avec au moins un module de fixation (14, 15, 16) et peuvent être fixés l'un à l'autre au moyen du au moins un module de fixation (14, 15, 16), dans lequel l'élément de coque (13) et l'élément de baguette de fixation (12) sont respectivement réalisés sous forme de pièce moulée par injection en matière plastique constituée d'au moins une matière plastique,
dans lequel l'élément de baguette de fixation (12) comporte un logement (20) destiné à recevoir une extrémité longitudinale (5') de l'élément de coque (13) et à positionner l'élément de coque (13) par rapport à l'élément de baguette de fixation (12),
dans lequel le logement (20) comporte une ouverture (21) et l'extrémité longitudinale (5') de l'élément de coque (13) comporte une saillie (22), dans lequel la saillie (22) peut être reçue dans l'ouverture (21) pour recevoir l'extrémité longitudinale (5') de l'élément de coque (13) et pour positionner l'élément de coque (13) par rapport à l'élément de baguette de fixation (12).

2. Dispositif de baguette pour véhicule selon la revendication 1,
**caractérisé en ce que**
l'élément de coque (13) et l'élément de baguette de fixation (12) sont fixés l'un à l'autre par enclenchement, serrage et/ou poussée conjointe par l'intermédiaire d'au moins un module de fixation (14, 15, 16).

3. Dispositif de baguette pour véhicule selon la revendication 1 ou 2,
**caractérisé en ce que**
l'élément de baguette de fixation (12) est formé avec au moins une partie fonctionnelle (17, 30, 50), en particulier une partie déflectrice d'eau (17), une lèvre (30, 50), en particulier une lèvre d'étanchéité et/ou une lèvre en caoutchouc.

4. Dispositif de baguette pour véhicule selon l'une des revendications précédentes,
**caractérisé en ce que**
l'élément de baguette de fixation (12) est formé avec une partie d'assemblage (18), dans lequel la partie d'assemblage (18), en particulier une partie d'embout (19), est destinée à assembler le dispositif de baguette pour véhicule (2) à une autre baguette pour véhicule, en particulier une barre de toit (7).

5. Dispositif de baguette pour véhicule selon l'une des revendications précédentes,
**caractérisé en ce que**
la saillie (22) peut en outre être coincée ou enclenchée dans l'ouverture (21) afin de fixer l'élément de coque (13) et l'élément de baguette de fixation (12) l'un à l'autre.

6. Dispositif de baguette pour véhicule selon l'une des revendications précédentes,
**caractérisé en ce que**
le module de fixation (14, 15, 16) se compose d'une première partie de fixation (24, 31, 41) sur un premier côté longitudinal (3', 3") de l'élément de coque (13) et de l'élément de baguette de fixation (12), et d'une seconde partie de fixation (25, 32, 42) sur un second côté longitudinal opposé (4', 4") de l'élément de coque (13) et de l'élément de baguette de fixation (12), dans lequel la première partie de fixation (24, 31, 41) et la seconde partie de fixation (25, 32, 42) s'étendent dans une direction longitudinale le long d'au moins une partie de longueur ou sur toute la longueur du dispositif de baguette pour véhicule (2) et/ou dans lequel les première et seconde parties de fixation (24, 31, 41 ; 25, 32, 42) du module de fixation (14, 15, 16) se chevauchent entièrement ou partiellement dans la direction longitudinale du dispositif de baguette pour véhicule (2).

7. Dispositif de baguette pour véhicule selon l'une des revendications précédentes,
**caractérisé en ce que**
l'élément de coque (13) et l'élément de baguette de fixation (12) sont formés avec un premier module de fixation (14), dans lequel le premier module de fixation (14) se compose d'une première partie de fixation (24) sur un premier côté longitudinal (3', 3") de l'élément de coque (13) et de l'élément de baguette de fixation (12) et d'une seconde partie de fixation (25) sur un second côté longitudinal opposé (4, 4") de l'élément de coque (13) et de l'élément de baguette de fixation (12),
dans lequel la première partie de fixation (24) est formée d'une saillie et d'une contre-dépouille (28), en particulier sous forme de partie en forme de crochet, de l'élément de coque (13) et d'une partie de serrage (29) de l'élément de baguette de fixation (12), dans lequel la partie de serrage (29) est accrochée à la contre-dépouille (28) par le dessous ou est entourée par celle-ci lorsque le dispositif de baguette pour véhicule (2) est à l'état monté, et
dans lequel la seconde partie de fixation (25) est formée d'une saillie (26) sur la face inférieure de l'élément de coque (13) et d'un logement (27) de l'élément de baguette de fixation (12) correspondant à la saillie (26), pour recevoir et de préférence coincer en plus la saillie (26) lorsque le dispositif de baguette pour véhicule (2) est à l'état monté.

8. Dispositif de baguette pour véhicule selon l'une des revendications précédentes,
**caractérisé en ce que**
l'élément de coque (13) et l'élément de baguette de fixation (12) sont formés avec un deuxième module de fixation (15), dans lequel le deuxième module de fixation (15) se compose d'une première partie de fixation (31) sur un premier côté longitudinal (3', 3") de l'élément de coque (13) et de l'élément de baguette de fixation (12), et d'une seconde partie de fixation (32) sur un second côté longitudinal opposé (4', 4") de l'élément de coque (13) et de l'élément de baguette de fixation (12),
dans lequel la première partie de fixation (31) est formée d'une saillie de positionnement (37) sur la face inférieure de l'élément de coque (13) et d'une zone associée du bord extérieur (38) de l'élément de baguette de fixation (12) afin de positionner l'élément de coque (13) avec sa saillie de positionnement (37) par rapport à l'élément de baguette de fixation (12) lorsque le dispositif de baguette pour véhicule (2) est à l'état monté, dans lequel un espace (39) est de préférence prévu entre le bord extérieur (38) de l'élément de baguette de fixation (12) et le bord intérieur opposé (40) de la saillie (37) de l'élément de coque (13), et
dans lequel la seconde partie de fixation (32) est formée d'un élément d'enclenchement (35) sur la face inférieure de l'élément de coque (13) et d'un logement (33) de l'élément de baguette de fixation (12) correspondant à l'élément d'enclenchement (35), afin de recevoir et d'enclencher l'élément d'enclenchement (35) lorsque le dispositif de baguette pour véhicule (2) est à l'état monté, dans lequel le logement (33) comporte de préférence une ouverture (34) pour l'enclenchement de l'élément d'enclenchement (35).

9. Dispositif de baguette pour véhicule selon l'une des revendications précédentes,
**caractérisé en ce que**
l'élément de coque (13) et l'élément de baguette de fixation (12) sont formés avec un troisième module de fixation (16), dans lequel le troisième module de fixation (16) se compose d'une première partie de fixation (41) sur un premier côté longitudinal (3', 3") de l'élément de coque (13) et de l'élément de baguette de fixation (12), et d'une seconde partie de fixation (42) sur un second côté longitudinal opposé (4', 4") de l'élément de coque (13) et de l'élément de baguette de fixation (12),
dans lequel la première partie de fixation (41) est formée d'une saillie (43) avec une contre-dépouille (44), en particulier sous forme de partie en forme de crochet, de l'élément de coque (13) et d'une partie de serrage (44) de l'élément de baguette de fixation (2), dans lequel la partie de serrage (45) est accrochée à la saillie (43) par le dessous avec la contre-dépouille (28) ou est entourée par celle-ci lorsque le dispositif de baguette pour véhicule (12) est à l'état monté, et
dans lequel la seconde partie de fixation (42) est formée d'une saillie de positionnement (46) sur la face inférieure de l'élément de coque (13) et d'une zone du bord extérieur (48) de l'élément de baguette de fixation (12) associée à la saillie de positionnement (46) afin de positionner l'élément de coque (3) avec sa saillie de positionnement (46) par rapport à l'élément de baguette de fixation (12) lorsque le dispositif de baguette pour véhicule (2) est à l'état monté, dans lequel un espace (47) est de préférence prévu entre le bord extérieur (48) de l'élément de baguette de fixation (12) et le bord intérieur opposé (52) de la saillie de positionnement (46) de l'élément de coque (13), dans lequel la zone associée du bord extérieur (48) comporte sélectivement et en plus une partie étagée (49) sur la face supérieure de laquelle est formée une partie fonctionnelle opposée à l'élément de coque (13), par exemple sous la forme d'une lèvre (50), en particulier d'une lèvre en caoutchouc ou d'une lèvre d'étanchéité.

10. Dispositif de baguette pour véhicule selon l'une des revendications précédentes,
**caractérisé en ce que**
les première et seconde parties de fixation (24, 31, 41 ; 25, 32, 42) d'au moins un module de fixation (14, 15, 16) sont agencées opposées l'une à l'autre sur les côtés longitudinaux (3', 3"; 4', 4") de l'élément de coque (13) et de l'élément de baguette de fixation (12), dans lequel les première et seconde parties de fixation (24, 31, 41 ; 25, 32, 42) se chevauchent au moins partiellement ou entièrement.

11. Dispositif de baguette pour véhicule selon l'une des revendications précédentes,
**caractérisé en ce que**
l'élément de baguette de fixation (12) est formé avec au moins un logement, en particulier une ouverture (11), pour recevoir et fixer, en particulier clipser ou enclencher, un dispositif de serrage (51), dans lequel le dispositif de serrage (51) est configuré de manière à assembler le dispositif de baguette pour véhicule (2) au véhicule associé et en particulier à sa carrosserie de véhicule, et de préférence pour le fixer au véhicule associé ou à sa carrosserie, par exemple pour le clipser ou l'enclencher sur le véhicule associé ou sa carrosserie.

12. Dispositif de baguette pour véhicule selon l'une des revendications précédentes,
**caractérisé en ce que**
l'élément de coque (13) et/ou l'élément de baguette de fixation (12) est ou sont réalisés sous forme de pièce moulée par injection à un composant ou de pièce moulée par injection à plusieurs composants, en particulier de pièce moulée par injection à deux ou trois composants.

13. Véhicule (1), en particulier véhicule à moteur, comportant au moins un dispositif de baguette pour véhicule (2) selon l'une des revendications précédentes, dans lequel le dispositif de baguette pour véhicule (2) est une baguette déflectrice d'eau qui s'étend avec son premier côté longitudinal (3) le long d'un pare-brise (8) du véhicule (1) et avec son second côté longitudinal (4) le long d'une paroi latérale (9) du véhicule (1).

14. Véhicule selon la revendication 13,
**caractérisé en ce que**
le dispositif de baguette pour véhicule (2) comporte une partie d'assemblage (18), dans lequel la partie d'assemblage (18) est réalisée sous la forme d'une partie d'embout (19) sur l'élément de baguette de fixation (12) et peut être assemblée et de préférence fixée à une barre de toit associée (7) du véhicule (1).
